# EUROPÄISCHE PATENTSCHRIFT

(11) **EP 3 099 543 B1**
(45) Veröffentlichungstag und Bekanntmachung des Hinweises auf die Patenterteilung: **15.04.2020**
(21) Anmeldenummer: 15702620.4
(22) Anmeldetag: 07.01.2015
(51) Int. Cl.: B60R 25/24, G07C 9/00

(54) **MONTAGEMODUL FÜR EIN KRAFTFAHRZEUG MIT EINEM OPTISCHEN SENSORSYSTEM UND EINER NOTBETÄTIGUNG**
ASSEMBLY MODULE FOR A MOTOR VEHICLE, COMPRISING AN OPTICAL SENSOR SYSTEM AND AN EMERGENCY ACTUATION MEANS
MODULE DE MONTAGE DESTINÉ À UN VÉHICULE AUTOMOBILE, MUNI D'UN SYSTÈME DE DÉTECTION OPTIQUE ET D'UNE COMMANDE D'URGENCE

(30) Priorität: 31.01.2014 DE 102014101199
(43) Veröffentlichungstag der Anmeldung: 07.12.2016
(60) Teilanmeldung: 19219398.5
(73) Patentinhaber: Huf Hülsbeck & Fürst GmbH & Co. KG, 42551 Velbert (DE)
(72) Erfinder: SCHINDLER, Mirko, 42549 Velbert (DE); STICHERLING, Nadine, 45257 Essen (DE); MÖNIG, Stefan, 58332 Schwelm (DE); SCHUMACHER, Helmut, 48653 Coesfeld (DE); ZIEGLER, Alexander, 42489 Wülfrath (DE); LINDIC, Iko, 45149 Essen (DE); HACHE, Christof, 42551 Velbert (DE); MÜLLER, Oliver, 42551 Velbert (DE); HELLER, Norbert, 47929 Grefrath (DE); YOMKIL MALABO, Jean, 45139 Essen (DE); ETTE, Bernd, 38442 Wolfsburg (DE)
(74) Vertreter: Patentanwälte Bals & Vogel
(86) Internationale Anmeldenummer: PCT/DE2015/100007
(87) Internationale Veröffentlichungsnummer: WO 2015/113553

(56) Entgegenhaltungen:
- WO-A1-2013/037806
- DE-A1-102007 050 094
- DE-A1-102008 021 989
- DE-A1-102009 023 594
- DE-A1-102010 056 171
- DE-A1-102010 060 364
- DE-A1-102011 115 760
- DE-B3-102005 032 402

## Beschreibung

### Beschreibung

Die Erfindung betrifft ein Montagemodul für ein Kraftfahrzeug, das geeignet ist, im Falle eines Erkennens des Benutzers in der Nähe des Kraftfahrzeuges ein Arbeitssignal für das Kraftfahrzeug bereitzustellen. Ferner betrifft die Erfindung ein Verfahren zum Auslösen eines Arbeitssignals für ein Kraftfahrzeug gemäß dem unabhängigen Patentanspruch 14.

Die DE 10 2010 060 364 A1 offenbart ein Verfahren zur Betätigung eines beweglichen Teils, insbesondere einer Klappe eines Kraftfahrzeugs. Weiter ist ein von außen zugänglicher Notschalter vorgesehen.

Die DE 10 2008 021 989 A1 offenbart eine Lichtquelle, durch die ein für den Benutzer sichtbares Bedienfeld ausgebildet wird. Das Bedienfeld ist auf einen geringen Teilbereich einer Bodenfläche, der in etwa einer Größe zweier Schuhabdrücke entspricht, begrenzt. Das Bedienfeld wird ausgebildet, wenn eine Personenannäherung durch einen nicht näher genannten Sensor detektiert worden ist. Der Benutzer kann das Bedienfeld mit einem Fuß bewusst berühren und damit eine Authentifizierungsüberprüfung zu einer Zugangsberechtigung starten.

Nachteilig hieran ist, dass zunächst eine Personenannäherung mit einem weiteren Sensor detektiert werden muss, bevor die Authentifizierungsüberprüfung gestartet wird. Zudem muss der Benutzer zum Starten der Authentifizierungsüberprüfung bereits nahe dem Kraftfahrzeug sein und bewusst ein sichtbares Bedienfeld betreten. Somit muss der Benutzer aktiv werden, um die Authentifizierungsüberprüfung zu starten. Dieses ist für den Benutzer zeitaufwendig.

Zudem ist es denkbar, dass derartige Systeme der Zugangsberechtigung, insbesondere in Extremsituationen ausfallen können, sodass dem Benutzer ein Zugang ins Kraftfahrzeug verwehrt ist.

Es ist daher die Aufgabe der vorliegenden Erfindung, ein Montagemodul für ein Kraftfahrzeug und ein Verfahren zum Auslösen zumindest eines Signals für ein Kraftfahrzeug bereitzustellen, das zumindest einen der vorgenannten Nachteile beseitigt, insbesondere ermöglicht, dass eine Authentifizierungsüberprüfung unbemerkt und/oder frühzeitig für den Benutzer und/oder gezielt für einen sich nähernden Benutzer gestartet wird, wobei die Funktionalität erweitert wird, wenn etwaige Funktionsstörungen im optischen Sensorsystem vorliegen.

Zur Lösung der Aufgabe wird ein Montagemodul mit sämtlichen Merkmalen des Anspruchs 1 vorgeschlagen. Vorteilhafte Weiterbildungen des Montagemoduls sind in den abhängigen Vorrichtungsansprüchen des Patentanspruches 1 angegeben. Zudem wird die Aufgabe durch ein Verfahren gemäß dem unabhängigen Patentanspruch 14 gelöst. Vorteilhafte Weiterbildungen sind in den abhängigen Verfahrensansprüchen angegeben.

Erfindungsgemäß weist die Erfindung ein Montagemodul für ein Kraftfahrzeug auf, mit einem optischen Sensorsystem, das geeignet ist,
a) einen außerhalb des Fahrzeuges liegenden Detektionsbereich zu überwachen,
b) im Falle eines Erkennens eines Benutzers im Detektionsbereich ein Signal für den Start einer Authentifizierungsüberprüfung zwischen einem ID-Geber und dem Kraftfahrzeug auszulösen,
c) einen außerhalb des Fahrzeuges liegenden, sich vom Detektionsbereich unterscheidenden Betätigungsbereich zu überwachen,
d) im Falle eines Erkennens eines Benutzers im Betätigungsbereich ein Arbeitssignal für das Fahrzeug bereitzustellen,
   wobei eine Notbetätigung zum zusätzlichen Auslösen des Arbeitssignals vorgesehen ist, die geeignet ist,
e) über eine Aktivierung der Notbetätigung mit einem Körperteil des Benutzers ein Arbeitssignal für das Fahrzeug bereitzustellen.

Besonders vorteilhaft ist, dass eine Redundanz geschaffen wird, falls die Funktionalität des optischen Sensorsystems etwaig eingeschränkt ist. Beispielsweise kann diese Einschränkung dann bestehen, wenn eine Verschmutzung außenseitig des Sensorsystems vorliegt und somit der Detektionsbereich und/oder der Betätigungsbereich nicht zufriedenstellend überwacht werden kann. Der Benutzer kann über eine aktive, bewusste Handlung an der Notbetätigung das Arbeitssignal triggern, um beispielsweise einen Entriegelungsvorgang, Verriegelungsvorgang, Öffnungsvorgang oder Schließvorgang eines beweglichen Teils des Kraftfahrzeuges, insbesondere der Heckklappe, des Kofferraumdeckels oder der Seitentür zu bewirken. Zudem ist es vorteilhaft, dass lediglich ein optisches Sensorsystem im Montagemodul integriert ist, welches zum einen den Detektionsbereich überwacht und zum anderen den Betätigungsbereich, der sich vom Detektionsbereich unterscheidet, überwacht, insbesondere erkennen kann, inwieweit ein Benutzer sich im Detektionsbereich und/oder im Betätigungsbereich befindet. Da lediglich ein optisches Sensorsystem zur Überprüfung der beiden außerhalb des Fahrzeugs liegenden Bereiche zum Einsatz kommt, lässt sich das Montagemodul bezüglich der Anzahl der Bauteile wesentlich reduzieren. Erst wenn der Benutzer sich im Detektionsbereich befindet, sorgt das optische Sensorsystem dafür, dass die Authentifizierungsüberprüfung zwischen dem ID-Geber und dem Kraftfahrzeug startet und im Falle einer positiven Authentifizierung, das bedeutet, wenn der berechtigte Benutzer sich im Detektionsbereich befindet, erfolgt über das optische Sensorsystem eine Überwachung des Betätigungsbereichs. Um final das Arbeitssignal für das Fahrzeug auszulösen, ist es erforderlich, dass der Benutzer sich in den Betätigungsbereich begibt, welches durch das optische Sensorsystem erkannt wird.

Das Montagemodul weist vorteilhafterweise eine Notbetätigung mit einem Aktivierungsmittel auf, das insbesondere ein Taster oder ein Schalter ist. Der Benutzer ist in der Lage, über die Betätigung des Aktivierungsmittels, welches zugänglich für den Benutzer ist, die Notbetätigung zu aktivieren, um das Arbeitssignal für das Fahrzeug bereitzustellen. Beispielsweise ist es denkbar, dass das Aktivierungsmittel kapazitiv oder induktiv oder berührungslos oder mit einem Piezoelement funktionierend ausgebildet ist.

In einer die Erfindung verbessernden Maßnahme kann das Sensorsystem geeignet sein, den Detektionsbereich und/oder den Betätigungsbereich mit einer erhöhten Leistung zu überwachen und/oder zu betreiben und/oder entstehen zu lassen, insbesondere wenn eine Verschmutzung am Sensorsystem vorliegt. Das Sensorsystem kann über die vergrößerte Leistung, mit der es betrieben wird, zuverlässig den Detektionsbereich und/oder den Betätigungsbereich überwachen. Die Verschmutzung des Sensorsystems kann automatisch erkannt werden. Beispielsweise ist es möglich, dass das optische Sensorsystem eine Kontrollvorrichtung aufweist, die für die Überwachung des Detektionsbereichs und/oder für das Erkennen des Benutzers im Detektionsbereich und des Auslösens der Authentifizierungsüberprüfung und/oder das Überwachen des Betätigungsbereichs und/oder das Auslösen des Arbeitssignals für das Kraftfahrzeug zuständig ist. Ebenfalls ist es denkbar, dass das Montagemodul einzelne Kontrolleinheitsmodule aufweist, die unabhängig voneinander jeweils für die Überwachung des Detektionsbereichs, für das Auslösen der Authentifizierungsüberprüfung, für die Überwachung des Betätigungsbereichs und für das Bereitstellen des Arbeitssignals zuständig sind. Diese einzelnen Kontrolleinheitsmodule sind vorteilhafterweise im optischen Sensorsystem integriert. Weiterhin kann erfindungswesentlich sein, dass durch den Einsatz des optischen Sensorsystems das Erkennen eines Benutzers auf den vorgegebenen, als Raumabschnitt abgrenzbaren Detektionsbereich außerhalb des Kraftfahrzeuges festgelegt sein kann. Die größeren Formen des Detektionsbereichs ergeben sich aus dem Aufbau des optischen Sensorsystems, wobei möglich ist, den Detektionsbereich so festzulegen, dass der Benutzer vor Einleitung einer Arbeitssignalauslösung im Detektionsbereich erkannt wird. Somit kann der Benutzer frühzeitiger als bei Verwendung eines kapazitiven Sensors, wie es im Stand der Technik beschrieben ist, erkannt werden. Zudem ist es möglich, den Detektionsbereich auf einen vorgegebenen Raumabschnitt zu beschränken, was z. B. bei einer Verwendung eines Hochfrequenzsignals, wie es auch im Stand der Technik verwendet wird, zum Erkennen eines Benutzers nicht möglich wäre. Somit können nur Benutzer, die sich nahe dem optischen Sensorsystem befinden, erkannt werden. Folglich kann in dem durch das optische Sensorsystem festgelegten Detektionsbereich ein Benutzer zum einen frühzeitig und zum anderen gezielt erkannt werden. Die Kontrollvorrichtung kann derart ausgebildet sein, dass diese eigenständig die Verschmutzung des Sensorsystems und/oder die Nichtfunktionsfähigkeit des Sensorsystems erkennt. Denkbar ist, dass stets die Notbetätigung vom Benutzer aktivierbar ist. Ebenfalls sieht das erfindungsgemäße Montagemodul vor, dass lediglich im Falle einer nicht korrekten Funktionsfähigkeit des optischen Sensorsystems die Notbetätigung "aktiv" geschaltet wird, insbesondere kann die Kontrollvorrichtung dafür sorgen, dass die Notbetätigung in Aktion treten kann.

Vorteilhafterweise kann das optische Sensorsystem einen Sensor und ein Lichtmodul aufweisen, mit dem Licht emittierbar ist, um einen Detektionsbereich entstehen zu lassen, wobei der Sensor ausgebildet ist, Licht aus dem Detektionsbereich und/oder dem Betätigungsbereich zu empfangen, wobei insbesondere der Detektionsbereich für den Benutzer nicht sichtbar ist.

Ebenfalls ist es denkbar, dass das Montagemodul mit einem Lichtmodul ausgebildet sein kann, das eine Vielzahl an Lichtquellen aufweist. Vorteilhafterweise emittiert das Lichtmodul IR-Strahlen. Das Licht dient dazu, den Detektionsbereich entstehen zu lassen. Es kann vorgesehen sein, dass der Detektionsbereich für den Benutzer unsichtbar ist. Die Lichtquellen und/oder das Lichtmodul können um den optischen Sensor angeordnet sein. So können z. B. Lichtquellen links und rechts von dem optischen Sensor angeordnet sein. Alternativ können die Lichtquellen um den Umfang des optischen Sensors herum angeordnet sein. Bei dem Licht kann es sich auch um Laser-Licht handeln.

Vorteilhafterweise kann das erfindungsgemäße Montagemodul ein Anzeigeelement vorsehen, um den Betätigungsbereich entstehen zu lassen, wobei insbesondere der Betätigungsbereich für den Benutzer sichtbar ist. Vorteilhafterweise entsteht der Betätigungsbereich erst dann, wenn eine positive Authentifizierungsüberprüfung vorliegt. Der Benutzer kann eine entsprechende Aktion und/oder Bewegung innerhalb des Betätigungsbereichs durchführen, wodurch das Arbeitssignal auslösbar ist. Das Sensorsystem überwacht hierbei den Betätigungsbereich und kann entsprechend definierter Kriterien entscheiden, inwieweit innerhalb des Betätigungsbereichs der Benutzer die "richtige" Aktion durchgeführt hat, um das Arbeitssignal zu triggern. Das Anzeigeelement kann z. B. dazu ausgebildet sein, den sichtbaren Betätigungsbereich auf der Bodenfläche, auf der auch das Kraftfahrzeug steht, zu erzeugen. Der Betätigungsbereich kann ebenfalls auf einer entsprechenden Höhe, das heißt, beabstandet zur Bodenfläche, am Kraftfahrzeug liegen. Z. B. ist es denkbar, dass ungefähr auf der Höhe des optischen Sensorsystems der Betätigungsbereich liegt.

Zudem ist es denkbar, dass das Montagemodul in einer Aufnahme angeordnet sein, die zur Montage des Montagemoduls an dem Kraftfahrzeug ausgebildet ist, insbesondere dass das Montagemodul oder die Aufnahme geeignet ist, am Fahrzeugheck oder an einer Fahrzeugseite befestigt zu werden, insbesondere dass das Montagemodul in eine Griffleiste des Kraftfahrzeuges integrierbar ist, oder dass die Aufnahme an einem Emblem des Kraftfahrzeuges angeordnet ist. Die Griffleiste kann z. B. an der Heckklappe des Kraftfahrzeuges angeordnet sein. Alternativ kann die Griffleiste im Bereich des Türgriffes liegen. Folglich kann der Betätigungsbereich im Bereich des Türgriffes liegen. Der Betätigungsbereich kann alternativ aber auch einfach nur einen vorgegebenen Abstand oder Abstandsbereich vom Anzeigeelement aufweisen, der dem Benutzer bekannt ist. Ebenfalls ist es denkbar, dass mehrere Betätigungsbereiche vorhanden sind und in jedem Betätigungsbereich der Benutzer den Benutzerwillen zeigen muss, damit der Benutzerwillen erkannt wird und das Arbeitssignal bereitgestellt wird. Vorzugsweise wird im Falle des Erkennens des Benutzers im Betätigungsbereich der Benutzerwille durch eine vordefinierte Bewegung erkannt. Bei der vordefinierten Bewegung kann es sich um die Bewegung eines Körperteils des Benutzers im oder am Betätigungsbereich handeln. Bei der vordefinierten Bewegung kann es sich zusätzlich oder alternativ um die Bewegung eines Körperteils des Benutzers in dem Betätigungsbereich und/oder aus dem Betätigungsbereich handeln.

Das Körperteil kann ein Fuß oder eine Hand des Benutzers sein. Es kann auch sein, dass die vordefinierte Bewegung genauer festgelegt ist, beispielsweise kann die vordefinierte Bewegung einer vorgegebenen Gestik entsprechen.

Ebenfalls kann die Erfindung vorsehen, dass das Sensorsystem derart ausgebildet ist, dass der Detektionsbereich in mindestens zwei Zonen aufgeteilt ist, in eine Nahzone und in eine Fernzone, wobei die Nahzone in einem geringeren Abstand zum Sensorsystem liegt als die Fernzone, wobei ein Erkennen des Benutzers gemäß b) des Anspruches 1 erst dann erfolgt, wenn der Benutzer sich in der Nahzone befindet. Das Sensorsystem kann so konfiguriert sein, dass eine ständige und permanente Detektionsbereichsüberwachung durchgeführt wird, wobei vorteilhafterweise der Benutzer in der Fernzone bereits durch das Sensorsystem erkannt wird, jedoch noch keine Authentifizierungsüberprüfung gestartet wird, die zusätzliche Energie des Kraftfahrzeugs benötigt. Erst wenn der Benutzer sich in der Nahzone befindet, welches durch das Sensorsystem erkannt wird, wird ein Signal für den Start der Authentifizierungsüberprüfung ausgelöst. Eine Grenze der Nahzone zur Fernzone kann z. B. in einem Abstand Z zum optischen Sensorsystem vorgesehen sein. Beispielsweise beträgt der Abstand Z ungefähr Z = 0,6 m.

Erfindungsgemäß kann das Lichtmodul und/oder der Sensor ein Linsensystem aufweisen, wobei insbesondere das Linsensystem einen Filter aufweist. Es kann vorgesehen sein, dass das Linsensystem, insbesondere der Sensor einen Infrarotfilter und/oder ein Störlicht herausfiltern kann. Bei dem Störlicht kann es sich beispielsweise um Sonnenlicht oder um Licht einer künstlichen Lichtquelle, z. B. Garagenlicht, handeln. Ebenfalls kann das Lichtmodul einen Polarisationsfilter aufweisen.

Das optische Sensorsystem kann mit der Kontrolleinheit zum Auswerten des optischen Sensors ausgeführt sein. Die Kontrolleinheit kann dazu ausgebildet sein, Bilder auszuwerten, die vom optischen Sensor aufgenommen worden sind. Hierbei kann es sich um Bilder des Detektionsbereichs und/oder des Betätigungsbereichs handeln.

Die Erfindung kann vorsehen, dass das optische Sensorsystem ausgebildet ist, Erkennungsbilder und Vergleichsbilder aufzunehmen und gegebenenfalls auszuwerten. Erkennungsbilder entstehen mit Hilfe der Reflexion des emittierten Lichts des Lichtmoduls.

Vergleichsbilder entstehen nur mit Hilfe des Störlichts. Zum Entstehen der Vergleichsbilder emittiert das Lichtmodul kein Licht. Die Kontrolleinheit kann durch Vergleich eines Erkennungsbildes und eines Vergleichsbildes das Störlicht erkennen. Die Kontrolleinheit kann hierdurch ein modifiziertes Erkennungsbild generieren, aus dem das Störlicht entfernt ist. Das optische Sensorsystem kann so ausgebildet sein, dass jeweils nach einer vorgegebenen Anzahl von Erkennungsbildern ein Vergleichsbild aufgenommen wird. Durch die genannten Maßnahmen ist es möglich, dass das optische Sensorsystem ein Bild, das nur durch das Licht des Lichtmoduls erzeugt ist, generiert. Die Kontrolleinheit kann den Benutzer gleich erkennen. Hierzu wertet die Kontrolleinheit die vom optischen Sensor empfangenen Bilder nach vorgegebenen Kriterien aus. Die Kontrolleinheit kann schließlich das Signal für den Start der Authentifizierungsüberprüfung auslösen.

Erfindungsgemäß kann das optische Sensorsystem in der Fernzone eine definierte Anforderung an das Erkennen des Benutzers überprüfen. Beispielsweise kann die Größe des Objekts in der Fernzone durch das optische Sensorsystem überprüft werden. Insbesondere kann es sich um eine andere Anforderung handeln als diejenige, die in der Nahzone überprüft wird. Bevorzugt wird eine Anforderung in der Fernzone gewählt, die weniger elektrische Leistung benötigt als die Anforderung in der Nahzone. Es kann sein, dass eine Messung des Abstandes des Objekts zum optischen Sensor nur in der Nahzone durchgeführt wird. Durch diese Aufteilung kann ebenfalls elektrische Leistung eingespart werden.

Zudem kann der optische Sensor ein LDPD-Sensor (Lateral Drift Field Photodetector) ausgeführt sein. Ebenfalls kann ein CMOS-Sensor innerhalb des optischen Sensorsystems zum Einsatz kommen. Die genannten optischen Sensoren nehmen Bilder des Detektionsbereichs bzw. des Betätigungsbereichs auf. Jedes Bild kann insbesondere aus einer Gesamtzahl von Pixeln zusammengesetzt sein. Der optische Sensor kann einen Bildsensor aufweisen, der die Gesamtzahl der Pixel aufweist. Der LDPD-Sensor ist besonders geeignet, schnell ausgewertet zu werden und gleichzeitig energiearm zu arbeiten.

Weiterhin ist es vorteilhaft, dass das optische Sensorsystem derart ausgebildet ist, dass sich der Detektionsbereich zumindest teilweise oberhalb einer Bodenfläche, auf der das Kraftfahrzeug steht, befindet, insbesondere dass das Sensorsystem ein starres Linsensystem aufweist. Hierbei ist es denkbar, dass das optische Sensorsystem dazu ausgebildet ist, den Detektionsbereich dauerhaft bei einem abgestellten Kraftfahrzeug bis zu einer erfolgreichen Authentifizierung zu überwachen. Hierbei kann dauerhaft bedeuten, dass das optische Sensorsystem dazu ausgebildet ist, nach jeder vorgegebenen Zeitspanne t ein Bild aufzunehmen und/oder auszuwerten. Insbesondere kann die Zeitspanne t 1 ms ≤ t ≤ 3 s, bevorzugt 0,05 s ≤ t ≤ 0,05 s betragen. Das optische Sensorsystem kann vom Abstellen des Kraftfahrzeuges bis zu einer erfolgreichen Authentifizierung den Detektionsbereich dauerhaft überwachen. Die dauerhafte Überwachung kann beispielsweise ab dem Zeitpunkt durchgeführt werden, ab dem kein Zündschlüssel steckt und/oder das Kraftfahrzeug verriegelt und vom Benutzer verlassen ist.

Um den Detektionsbereich dauerhaft überwachen zu können, muss genügend elektrische Leistung über einen längeren Zeitraum dem optischen Sensorsystem und/oder dem Authentifizierungssystem zur Verfügung gestellt werden. Hierzu kann z. B. eine Batterie des Kraftfahrzeuges dem optischen Sensorsystem und/oder dem Authentifizierungssystem elektrische Leistung zur Verfügung stellen. Damit das abgestellte Kraftfahrzeug auch nach mehreren Wochen im abgestellten Zustand funktionsfähig ist, ist es notwendig, dass das optische Sensorsystem nur eine geringe elektrische Leistung benötigt. Hierzu dienen die folgenden Maßnahmen. So kann z. B. das optische Sensorsystem eine geringe elektrische Leistung beim Emittieren des Lichtes und/oder eine geringe Leistung bei Auswertung des optischen Sensors benötigen. Des Weiteren kann das optische Sensorsystem so ausgebildet sein, dass das Signal für den Start der Authentifizierungsüberprüfung nur selten ausgelöst wird. Dies wird u. a. dadurch erreicht, dass der Detektionsbereich eine Nahzone und eine Fernzone aufweist.

Der Vorteil eines starren Linsensystems ist, dass das Linsensystem sowohl den Detektionsbereich als auch den Betätigungsbereich überwachen kann. Das bedeutet, dass lediglich ein Linsensystem für den Detektionsbereich und den Betätigungsbereich zum Einsatz kommt.

Des Weiteren kann erfindungsgemäß vorteilhaft sein, dass das Lichtmodul einen Abstand d zum optischen Sensor aufweist, der insbesondere einen Betrag von ungefähr 1 cm ≤ d ≤ 3cm aufweist, bevorzugt ungefähr 2cm beträgt, und/oder dass das Sensorsystem derart ausgebildet ist, dass der Detektionsbereich sich ungefähr bis zu 2m erstreckt. Es hat sich vorteilhafterweise gezeigt, dass möglichst viele Lichtstrahlen des Lichtmoduls auch im Empfangsbereich des optischen Sensors gelangen, sodass das Lichtmodul Licht einer geringen Intensität emittieren muss. Hierdurch muss das Lichtmodul eine geringere elektrische Leistung aufnehmen.

Ebenfalls sieht die Erfindung vor, dass das Arbeitssignal ein Signal zum Entriegeln und/oder Verriegeln und/oder Öffnen und/oder Verschließen eines beweglichen Teils des Kraftfahrzeuges ist, wobei insbesondere das bewegliche Teil eine Heckklappe oder eine Seitentür oder eine Schiebetür ist. Die Heckklappe und/oder die Seitentür kann als Schiebetür ausgebildet sein. Nach dem Signal zum Öffnen des beweglichen Teils kann das bewegliche Teil entriegelt werden. Insbesondere durch die Federwirkung einer Dichtung des beweglichen Teils kann sich das bewegliche Teil danach teilweise aus einer geschlossenen Stellung bewegen und sich somit teilweise öffnen. Zusätzlich oder alternativ kann es sich bei dem Arbeitssignal um ein Signal handeln, das eine motorische Öffnungs- und/oder Zuziehhilfe aktiviert. Hierbei weist das Kraftfahrzeug einen Motor auf, der das bewegliche Teil vollständig öffnet und/oder schließt.

Bei dem Signal zum Öffnen und/oder Schließen des beweglichen Teils kann es sich insbesondere um ein Signal an ein elektromechanisches Türschloss handeln.

Dadurch, dass der Detektionsbereich überwacht wird und im Falle eines Erkennens des Benutzers im Detektionsbereich die Authentifizierungsüberprüfung gestartet wird, ist insbesondere keine aktive Handlung eines Benutzers notwendig, um den Start einer Authentifizierungsüberprüfung vorzunehmen. Vielmehr wird vorzugsweise von dem Benutzer unbemerkt der Start der Authentifizierungsüberprüfung eingeleitet. Somit kann vorgesehen sein, dass das optische Sensorsystem eine Passive-Keyless-Entry-Überprüfung einleitet. Unter einer Passive-Keyless-Entry-Überprüfung wird ein Verfahren verstanden, bei dem unbemerkt durch den Benutzer eine Authentifizierungsüberprüfung stattfindet Die Authentifizierungsüberprüfung bei einer Passive-Keyless-Entry-Überprüfung muss der Benutzer nicht durch eine bewusste Handlung einleiten.

Denkbar ist, dass sich in einer Draufsicht der Detektionsbereich zum optischen Sensorsystem hin verkleinert. Hierdurch werden gezielt nur Benutzer erkannt, die sich voraussichtlich dem optischen Sensorsystem und/oder dem Kraftfahrzeug annähern werden.

Das Montagemodul kann z. B. dazu ausgebildet sein, so eingebaut zu werden, dass sich der Detektionsbereich zumindest teilweise oberhalb einer Bodenfläche, auf der das Kraftfahrzeug steht, befindet. Hierdurch ist der Detektionsbereich nicht nur auf einen geringen Teilbereich einer Bodenfläche vor einem Kraftfahrzeug beschränkt. Das Gleiche gilt selbstverständlich auch für den Betätigungsbereich. Es kann sein, dass der Detektionsbereich und/oder der Betätigungsbereich in Kraftfahrzeugnähe oberhalb der Bodenfläche beginnt und dann schräg bis zu Erreichen der Bodenfläche verläuft. Hierbei endet der Detektionsbereich und/oder der Betätigungsbereich an der Bodenfläche. Alternativ kann der Detektionsbereich und/oder der Betätigungsbereich zumindest teilweise oberhalb der Bodenfläche enden. In einer besonderen Ausführungsform befindet sich der Detektionsbereich und/oder Betätigungsbereich vollständig oberhalb der Bodenfläche, insbesondere in einem definierten Abstand zur Bodenfläche.

Vorteilhafterweise kann das Lichtmodul sowie das Anzeigeelement derart ausgerichtet sein, dass der Betätigungsbereich näher am Kraftfahrzeug sich befindet als der Detektionsbereich, insbesondere dass zwei Betätigungsbereiche vorgesehen sind. Der Betätigungsbereich kann innerhalb des Detektionsbereichs liegen, wobei der Detektionsbereich größer ausgeführt ist als der Betätigungsbereich.

Um das Arbeitssignal für das Fahrzeug zu triggern, ist das optische Sensorsystem derart konfiguriert, dass nach einer definierten Zeit t der Betätigungsbereich bzw. die Betätigungsbereiche entsprechend einer vordefinierten Handlung oder Gestik des Benutzers "angesprochen" werden müssen. Ist dies nicht der Fall, ist einer Bereitstellung des Arbeitssignals für das Fahrzeug nicht möglich.

Das Montagemodul kann z. B. im Heckbereich des Kraftfahrzeugs eingesetzt werden, wobei das Anzeigeelement zusätzlich als Kfz-Kennzeichenbeleuchtung zum Einsatz kommen kann. Zusätzlich und/oder alternativ kann vorgesehen sein, dass das Montagemodul zur Anordnung in einem Emblem des Kraftfahrzeuges ausgebildet ist. Alternativ und/oder zusätzlich kann das Montagemodul geeignet sein, an einer Kraftfahrzeugseite z. B. in einer B-Säule befestigt zu werden. Hierdurch können unterschiedliche Detektionsbereiche, in denen sich üblicherweise ein Benutzer dem Kraftfahrzeug nähert, mit dem optischen Sensorsystem überwacht werden. Auch hier erfolgt nach einer positiven Authentifizierungsüberprüfung das Bereitstellen des Betätigungsbereiches durch das optische Sensorsystem.

Vorteilhafterweise ist das optische Sensorsystem so konfiguriert, dass in der Nahzone des Detektionsbereiches und/oder im Betätigungsbereich eine Abstandsänderung berechnet wird, und zwar, wenn der Benutzer sich in der Nahzone oder in dem Betätigungsbereich aufhält. Hierbei wird insbesondere bei zumindest zwei aufeinanderfolgenden Bildern, insbesondere Erkennungsbildern gemessen. Der Abstand kann durch eine Time-of-Flight-Messung durchgeführt werden. Es kann sein, dass der optische Sensor eine Auflösung aufweist, bei der 2 Pixel der Fläche des Körperteils entsprechen. Eine Variation der Pixelgröße ist ebenfalls denkbar. Über die Wahl der Pixelgröße lässt sich Energie einsparen, die das optische Sensorsystem für die Überwachung des Außenbereiches des Kraftfahrzeuges benötigt.

Vorteilhafterweise kann das Lichtmodul zur Überwachung des Detektionsbereiches das gleiche Licht bezüglich der Wellenlänge und/oder der Dauer eines Lichtpulses wie zur Überwachung des Betätigungsbereiches emittieren. Vorzugsweise wird der Aufbau des optischen Sensorsystems nicht verändert. So kann das Lichtmodul zur Überwachung des Detektionsbereiches denselben Sendebereich wie zur Überwachung des Betätigungsbereiches aufweisen. Auch kann der optische Sensor zu der Überwachung des Detektionsbereiches denselben Empfangsbereich wie zu der Überwachung des Betätigungsbereiches aufweisen. Somit lässt sich ein kostengünstiges optisches Sensorsystem für das Montagemodul bereitstellen.

Da vorzugsweise der Betätigungsbereich eine geringere räumliche Ausdehnung als der Detektionsbereich aufweist, kann es vorteilhaft sein, dass die Kontrolleinheit des optischen Sensorsystems bei der Überwachung des Betätigungsbereiches nur einen kleinen Teil des vom optischen Sensor aufgenommenen Bildes auswertet. Dieser Teil entspricht dem Bild des Betätigungsbereiches. Die Anzahl der ausgewerteten Pixel kann geringer als die Gesamtzahl der Pixel sein. Auch hierdurch lässt sich ein energiearmer Betrieb des Sensorsystems bereitstellen.

Das Anzeigeelement kann innerhalb des optischen Sensorsystems mitintegriert sein. Ebenfalls ist es denkbar, dass das Anzeigeelement beabstandet und baulich getrennt vom optischen Sensorsystem am Kraftfahrzeug befestigbar ist.

Es kann vorgesehen sein, das optische Sensorsystem oder das gesamte Montagemodul zur Anordnung am Fahrzeugheck, z. B. hinter der Heckscheibe, in eine Griffleiste, in ein Emblem, in eine Rückleuchte, hinter ein Katzenauge, an einen Stoßfänger und/oder in einem Spalt zwischen zwei Komponenten, ausgebildet ist. Alternativ oder zusätzlich kann das Montagemodul geeignet sein, an einer Fahrzeugseite z. B. in einer B-Säule befestigt zu werden. Hierdurch können unterschiedliche Detektionsbereiche, in denen sich üblicher Weise ein Benutzer dem Kraftfahrzeug annähert, mit dem optischen Sensorsystem überwacht werden. Insbesondere kann das optische Sensorsystem oder das gesamte Montagemodul hinter einer von außen undurchsichtigen Schicht verdeckt sein, die jedoch für das Licht des optischen Sensorsystems lichtdurchlässig ist. So kann z. B. der Stoßfänger, an dem das optische Sensorsystem montiert ist, lackiert sein.

Bevorzugt ist das optische Sensorsystem derart am Kraftfahrzeug angeordnet, dass es wenig verschmutzt. Z. B. kann das optische Sensorsystem hinter der Heckscheibe im Wischbereich des Scheibenwischers oder an der Griffleiste angeordnet sein. Alternativ oder zusätzlich kann das Montagemodul eine Waschdüse aufweisen, mit der das optische Sensorsystem gesäubert werden kann. Die Waschdüse kann hierbei z. B. immer dann automatisch das optische Sensorsystem reinigen, wenn auch der Scheibenwischer der Front- und/oder Heckscheibe betätigt wird. Ein sauberes optisches Sensorsystem benötigt eine geringere Lichtintensität zum Funktionieren, so dass auch hierdurch Energie gespart werden kann.

Die Intensität des emittierten Lichts kann von der Helligkeit des Umgebungslichts abhängen. Die Helligkeit des Umgebungslichts kann durch einen Helligkeitssensor ermittelt werden.

Können bei der Überwachung des Betätigungsbereichs verschiedene Benutzerwillen festgestellt werden, so können verschiedenen Gesten verschiedene Benutzerwillen zugeordnet werden. So kann z. B. mit dem Fuß in den Betätigungsbereich treten ein Öffnen der Heckklappe verursachen, während eine seitliche Bewegung einer Hand nahe dem optischen Sensor ein Ausfahren der Anhängerkupplung bewirkt.

Es ist denkbar, dass ein Entfernen des Objekts innerhalb einer vorgegebenen Entfernungsdauer aus dem Betätigungsbereich erfolgen muss, damit das Signal bereitgestellt wird. Das Entfernen eines Objektes innerhalb einer vorgegebenen Entfernungsdauer kann Teil der Geste sein. Der Beginn der Entfernungsdauer ist für den Benutzer wahrnehmbar. So kann z. B. ein Anzeigeelement mehrere Beleuchtungszustände einnehmen. In einem der Beleuchtungszustände kann ein solches Anzeigeelement Licht einer konstanten Helligkeit emittieren. In einem anderen Beleuchtungszustand kann z. B. die Helligkeit sich periodisch ändern. So kann z. B. der Beginn der Betätigungsdauer das Anzeigeelement Licht konstanter Helligkeit emittieren. Während der Entfernungsdauer kann das Anzeigeelement z. B. blinken. Nur wenn das Objekt, insbesondere ein Körperteil des Benutzers, innerhalb der Entfernungsdauer aus dem Betätigungsbereich entfernt wird, wird das Signal bereitgestellt.

Es kann vorgesehen sein, dass das Montagemodul und/oder Kraftfahrzeug zumindest ein Mittel aufweist, das es dem Benutzer erleichtert, den Benutzerwillen im Betätigungsbereich kund zu tun, so dass das Signal ausgelöst wird.

So kann das Montagemodul ein Hinweissignal aussenden, dass die Betätigungsdauer in Kürze enden wird. Das Hinweissignal kann z. B. durch einen Wechsel des Beleuchtungszustands des Anzeigeelements beginnen. Das Hinweissignal kann einem anderen Beleuchtungszustand des Anzeigeelements entsprechen. Z. B. kann zum Ende der Betätigungsdauer das Anzeigeelement blinken. Das Mittel entspricht einer entsprechenden Verfahrensvorgabe in der Überwachungseinheit.

Ebenfalls kann es für den Benutzer zum Kundtun seines Benutzerwillens hilfreich sein, wenn der Benutzer zu dem Betätigungsbereich geleitet wird. Dieses ist insbesondere der Fall, wenn der Benutzer durch Tragen eines großen Gegenstandes die Endfläche des Betätigungsbereichs auf der Bodenfläche nicht wahrnehmen kann. Hierzu kann das Montagemodul und/oder das Kraftfahrzeug Mittel aufweisen, durch die für den Benutzer ein wahrnehmbares, insbesondere sehbares, hörbares oder fühlbares, Signal erzeugt werden kann. So kann beispielsweise das Montagemodul Leuchtelemente, z. B. LEDs, aufweisen. Die Leuchtelemente können so angeordnet sein, dass die Leuchtelemente als Wegweiser wirken. Beispielsweise können die Leuchtelemente derart ausgerichtet sein, dass sie Markierungen auf der Bodenfläche erzeugen, die zum Betätigungsbereich hinführen. Zusätzlich oder alternativ können die Leuchtelemente nebeneinander angeordnet sein. Die Leuchtelemente können in einer Reihenfolge angeschaltet werden, die dem Benutzer zeigt, in welche Richtung der Benutzer sich auf den Betätigungsbereich zubewegen muss. Anstelle der Leuchtelemente können hierfür auch vorhandene, nebeneinander im Kraftfahrzeug angeordnete Lichtelemente, z. B. die Leuchtelemente eines Scheinwerfers, einer Bremsleuchte, Blinker oder dergleichen, verwendet werden. Ebenfalls ist es denkbar, dem Benutzer akustisch hörbar eine Anleitung zu geben, in welche Richtung der Benutzer sich bewegen muss. Hierzu kann das Montagemodul einen Lautsprecher aufweisen. Ebenfalls ist es denkbar, die Richtungsänderung dem ID-Geber mitzuteilen, der durch verschiedene Vibrationen dem Benutzer den Weg weist. Wird dem Benutzer eine Richtungsänderung mitgeteilt, so ermittelt das optische Sensorsystem die Position des Benutzers und die Richtung, in die er sich zu dem Betätigungsbereich bewegen muss, und veranlasst das wahrnehmbare Mittel, das entsprechende Signal auszusenden.

Ebenfalls kann es für den Benutzer hilfreich sein, dass die Position des Betätigungsbereichs und/oder die Länge der Betätigungsdauer veränderbar ist. Dieses ist insbesondere hilfreich, wenn ein körperlich beeinträchtigter Benutzer seinen Benutzerwillen kund tun möchte. Ebenfalls ist dieses hilfreich, wenn der Betätigungsbereich an einer für den Benutzer ungünstigen Position angeordnet ist. Die ungünstige Position kann hierbei dauerhaft sein. Z. B. kann der Betätigungsbereich auf einer Anhängerkupplung enden. Alternativ kann die ungünstige Position nur für ein Auslösen eines einmaligen Arbeitssignals ungünstig sein, z. B. weil der Betätigungsbereich an einer Pfütze endet. Um die Position des Betätigungsbereichs und/oder die Länge der Betätigungsdauer zu ändern, kann insbesondere eine vordefinierte Benutzerhandlung vorgesehen sein. So kann z. B. der Benutzer die Position des Betätigungsbereichs und/oder Länge der Betätigungsdauer durch eine Eingabe in einem Benutzermenü, z. B. eines KFZ-Steuergeräts oder eines ID-Gebers, ändern. Alternativ kann die vordefinierte Benutzerhandlung vom optischen Sensorsystem erkannt werden. In einer weiteren Alternative kann das Montagemodul in einen Lernmodus überführt werden, in dem das Montagemodul die geänderte Position des Betätigungsbereichs und/oder die geänderte Länge des Betätigungsbereichs lernt.

Ebenfalls kann es für den Benutzer hilfreich sein, dass der Betätigungsbereich erneut überwacht ist, um einen Benutzerwillen zum Auslösen eines Arbeitssignals festzustellen, nachdem eine erste Betätigungsdauer ohne Erkennen eines Benutzerwillens beendet ist. Dieses ist insbesondere hilfreich, wenn der Benutzer abgelenkt war und den Betätigungsbereich nicht rechtzeitig erreicht hat oder die falsche Geste durchgeführt hat. Daher kann vorgesehen sein, dass der Betätigungsbereich mehrmals, insbesondere zwei-oder dreimal, hintereinander überwachbar ist. Das erneute Überwachen des Betätigungsbereichs kann automatisch eingeleitet werden. Alternativ kann eine vordefinierte Benutzerhandlung vorgesehen sein, um den Betätigungsbereich erneut für eine weitere Betätigungsdauer zu überwachen. Hierzu kann beispielsweise ein kapazitiver Sensor von dem Benutzer angesprochen werden. Alternativ kann es sich um eine vordefinierte Benutzerhandlung handeln, die vom optischen Sensorsystem erkannt wird.

Bei der vordefinierte Benutzerhandlung, die vom optischen Sensorsystem erkannt wird und die eine Änderung der Position des Betätigungsbereichs und/oder der Betätigungsdauer und/oder eine erneute Überwachung des Betätigungsbereichs zum Erkennen eines Benutzerwillens veranlasst, kann es sich beispielhaft um folgende Benutzerhandlungen handeln: eine vorgegebene Gestik innerhalb des Betätigungs- und/oder Detektionsbereichs, beispielsweise ein Hin- und Herbewegen eines Körperteils des Benutzers, ein Nicht-Entfernen des Körperteils, sofern ein Entfernen vorgesehen war, eine Bewegung des Benutzers in den Detektions- und/oder Betätigungsbereich und/oder aus dem Detektions-und/oder Betätigungsbereich. Insbesondere kann der Körperteil eine Hand oder ein Fuß sein. Weiter kann vorgesehen sein, dass der Benutzer den Detektionsbereich für eine vorgegebene Zeit verlässt und sich dann wieder in den Detektionsbereich begibt.

Wird der Betätigungsbereich erneut zum Feststellen eines Benutzerwillens überwacht, so zeigt auch das Anzeigeelement dieses an. Wird die Position des Betätigungsbereichs verändert, so zeigt das Anzeigeelement dieses an. Hierzu kann das Anzeigeelement mehrere Leuchtmittel, z. B. LEDs, auf. Jeweils ein oder mehrere Leuchtmittel machen jeweils einen Betätigungsbereich zumindest teilweise sichtbar. Vorzugsweise liegt der Betätigungsbereich mit der geänderten Position innerhalb des Detektionsbereichs. Je nachdem welcher Betätigungsbereich überwacht wird, werden die entsprechenden Pixel ausgewertet.

Es kann sein, dass eine Position des ID-Gebers während oder nach einer Authentifizierung und vor Auslösen des Signals überprüft wird. Hierzu kann die Stärke eines von einem ID-Geber ausgesendeten Signals verwendet werden. Beispielsweise kann der Receive Signal Strength Indicator (RSSI) hierzu verwendet werden. Durch die Ermittlung der Stärke des ausgesendeten Signals kann z. B. festgestellt werden, ob sich der Benutzer vor, neben oder hinter dem Kraftfahrzeug befindet. Hierdurch kann sichergestellt werden, dass nur der berechtigte Benutzer selber in den Detektionsbereich gelangt ist und seinen Benutzerwillen im Betätigungsbereich kundgetan hat. Es ist denkbar, den RSSI zyklisch abzufragen.

Ebenfalls kann durch Licht verschiedener Wellenlängen Energie gespart werden. So kann die Überwachung des Detektionsbereichs bis zum einmaligen Erkennen eines beliebigen Objekts im Detektionsbereich mit Licht einer längeren Wellenlänge erfolgen als das anschließende Überprüfen weiterer Anforderungen, die an das Erkennen eines Benutzers gestellt sind. So kann zunächst z. B. Licht einer Wellenlänge von 905 nm verwendet werden. Wird ein Objekt im Detektionsbereich festgestellt, so kann z. B. Licht einer Wellenlänge von 800 nm verwendet werden. Alternativ kann sich die Wellenlänge verkürzen, wenn das Objekt von der Fern- in die Nahzone wechselt.

Zudem wird die Aufgabe durch ein Verfahren mit sämtlichen Merkmalen des unabhängigen Patentanspruches 14 gelöst. Das Verfahren zur Auslösung eines Arbeitssignals für ein Kraftfahrzeug weist ein optisches Sensorsystem auf, welches folgende Schritte durchführt:
a) Überwachen eines außerhalb des Fahrzeuges liegenden Detektionsbereichs,
b) im Falle eines Erkennens eines Benutzers im Detektionsbereich Auslösen eines Signals für den Start einer Authentifizierungsüberprüfung zwischen einem ID-Geber und dem Kraftfahrzeug,
c) Überwachen eines außerhalb des Kraftfahrzeuges liegenden, sich vom Detektionsbereich unterscheidenden Betätigungsbereich,
d) im Falle eines Erkennens eines Benutzers im Betätigungsbereich Bereitstellen des Arbeitssignals für das Kraftfahrzeug,
wobei zusätzlich eine Notbetätigung vorgesehen ist, die folgende Schritte durchführt:
e) im Falle einer Aktivierung der Notbetätigung mit einem Körperteil des Benutzers zusätzliches Bereitstellen des Arbeitssignals für das Kraftfahrzeug.

Die Vorteile des erfindungsgemäßen Verfahrens entsprechen im Wesentlichen den geschilderten Vorteilen bezüglich des erfindungsgemäßen Montagemoduls. Bevorzugt handelt es sich bei dem erfindungsgemäßen Verfahren um ein Verfahren, das mit dem Montagemodul, wie zuvor beschrieben, ausführbar ist. Insbesondere kann es sich bei der Authentifizierung um eine Passive-Keyless-Entry-Überprüfung handeln. Im Folgenden sollen einige erfindungswesentliche Punkte erneut dargestellt werden, wobei für genauere Ausführungen auf die allgemeine Beschreibung zum erfindungsgemäßen Montagemodul verwiesen wird, die ebenfalls für das erfindungsgemäße Verfahren gelten.

Vorteilhafterweise wird der Detektionsbereich dauerhaft überprüft. Falls eine Funktionsstörung vorliegen sollte, kann der Benutzer über eine Aktivierung der Notbetätigung, die insbesondere vom Benutzer bewusst über eine definierte Handlung und/oder Gestik durchgeführt wird, das Arbeitssignal triggern. Hierbei kann die Notbetätigung kapazitiv und/oder induktiv und/oder berührungslos betätigt werden Vorteilhafterweise ist Schritt e) dann durchführbar, wenn eine Defekt und/oder eine Verschmutzung des optischen Sensorsystems vorliegen sollte.

Vorteilhafterweise kann die Notbetätigung erst dann aktiviert werden, wenn ein Defekt und/oder eine Verschmutzung des optischen Sensorsystems erkannt wird. Beispielsweise kann eine Kontrollvorrichtung im Montagemodul vorgesehen sein, die für diese Erkennung zuständig ist. Erst wenn ein Defekt oder eine Verschmutzung vorliegen sollte, schaltet die Kontrollvorrichtung die Notbetätigung für den eigentlichen Betrieb zu. Zusätzlich und/oder alternativ umfasst die Erfindung auch den Gedanken, dass die Notbetätigung stets vom Benutzer aktivierbar ist.

In einer weiteren die Erfindung verbessernden Maßnahme kann gemäß Schritt e) nach einer Aktivierung der Notbetätigung eine Authentifizierungsüberprüfung zwischen dem ID-Geber und dem Kraftfahrzeug durchgeführt werden, und erst bei einer positiven Authentifizierungsüberprüfung wird das Arbeitssignal für das Kraftfahrzeug bereitgestellt.

Vorteilhafterweise wird im Falle einer Erkennung einer Verschmutzung des optischen Sensorsystems, das Sensorsystem mit einer erhöhten Leistung betrieben, insbesondere um den Detektionsbereich und/oder den Betätigungsbereich zu überwachen und/oder den Detektionsbereich und/oder den Betätigungsbereich zu schaffen.

Vorteilhafterweise wird der Detektionsbereich dauerhaft überwacht. Jedoch benötigt das optische Sensorsystem wenig Energie, um zuverlässig den Detektionsbereich zu überwachen. Vorteilhafterweise ist der Detektionsbereich in mindestens zwei Zonen aufgeteilt, in eine Nahzone und in eine Fernzone, wobei die Nahzone in einem geringeren Abstand zum Sensorsystem liegt als die Fernzone, wobei ein Erkennen des Benutzers gemäß Schritt b) erst dann erfolgt, wenn der Benutzer sich in der Nahzone befindet. Erfindungsgemäß kann das Sensorsystem Licht im für den Benutzer nicht sichtbaren Bereich aussenden. Erfindungsgemäß ist vorgesehen, dass das Sensorsystem gepulstes Licht aussendet. Zudem kann die Erfindung vorsehen, dass das Sensorsystem zwischen einem Ruhemodus und einem Arbeitsmodus schaltbar ist, wobei solange das Sensorsystem im Ruhemodus geschaltet ist, bis der Benutzer in die Nahzone gelangt. Hierdurch lässt sich Energie während des Betriebes des Verfahrens einsparen. Vorteilhafterweise ist die Pulsfrequenz im Ruhemodus geringer als im Arbeitsmodus. Ebenfalls kann es sein, dass mehrere Lichtpulse vom Lichtmodul nacheinander emittiert werden, um ein Bild erzeugen zu können. Die Lichtpulse können aufintegriert oder aufsummiert werden, um das Bild zu erzeugen. Ebenfalls kann die Kontrolleinheit im Schritt a) während der Überwachung des Detektionsbereiches oder im Schritt d) während der Überwachung des Betätigungsbereiches nur einen Teil des vom optischen Sensor aufgenommenen Bildes auswerten. Auch hier lässt sich Energie einsparen.

Vorzugsweise wird ein Zugangskontrollsystem eines Kraftfahrzeuges gemäß Schritt b) ein Wecksignal an den ID-Geber senden. Anschließend wird ein Authentifizierungscode vom ID-Geber zu einem Zugangskontrollsystem des Kraftfahrzeuges gesendet. Darauf vergleicht das Zugangskontrollsystem den Authentifizierungscode mit einem gespeicherten Code. Gegebenenfalls kann im Falle einer Übereinstimmung ein Signal, insbesondere ein Entriegelungssignal und/oder ein Signal zur Überwachung des Betätigungsbereichs ausgelöst werden. Somit kann der Schritt c) bzw. der Schritt d) durchgeführt werden.

Das erfindungsgemäße Verfahren kann vorsehen, dass durch die Aussendung des erfindungsgemäß gepulstem Licht durch das Sensorsystem zuverlässig eine Abstandsänderung eines im Detektionsbereich oder im Betätigungsbereich sich aufhaltenden Benutzers ermittelt werden kann. Vorteilhafterweise weist das Verfahren ein Anzeigeelement auf, das für den Schritt c) Licht im sichtbaren Bereich aussendet, um einen Betätigungsbereich für den Benutzer zu schaffen, insbesondere dass der Betätigungsbereich im Detektionsbereich liegt. In der Regel ist der Betätigungsbereich in seiner räumlichen Gestaltung kleiner ausgeführt als der Detektionsbereich. Vorteilhafterweise befindet sich der Betätigungsbereich in einem geringeren Abstand zum Kraftfahrzeug, insbesondere zum Sensorsystem als der Detektionsbereich.

In einer die Erfindung verbessernden Maßnahme kann das Sensorsystem einen Sensor aufweisen, der Licht aus dem Detektionsbereich und/oder Betätigungsbereich empfängt, wobei das Sensorsystem eine Kontrolleinheit aufweist, die Daten des Sensors auswertet. Zudem schließt das erfindungsgemäße Verfahren ein Sensorsystem mit ein, das eine Vielzahl an Lichtbündel, insbesondere Lichtkegel emittiert, die zusammengesetzt den Detektionsbereich und/oder den Betätigungsbereich bilden können. Somit kann das Sensorsystem eine Vielzahl an Lichtquellen aufweisen, die gepulstes Licht in den Detektionsbereich emittieren.

Das gepulste Licht ist im nicht sichtbaren Wellenlängenbereich, sodass vorteilhafterweise der Benutzer unbemerkt im Schritt b) erkannt wird, wodurch auch unbemerkt die Authentifizierungsüberprüfung erfolgt. Vorteilhafterweise liegt der Betätigungsbereich innerhalb des Detektionsbereich, wobei der Betätigungsbereich sich in seiner Dimension vom Detektionsbereich unterscheidet, insbesondere der Betätigungsbereich geringer ist als der Detektionsbereich. Wenn der Benutzer innerhalb des Betätigungsbereichs eine bewusste Handlung durchführt, befindet sich der Benutzer immer noch im Detektionsbereich, wobei das Lichtmodul im Schritt c) weiterhin Licht im nicht sichtbaren Bereich emittiert. Dieses Licht ist vorteilhafterweise gepulst, sodass auch im Betätigungsbereich eine Abstandsänderung ermittelt werden kann, die durch eine Bewegung des Benutzers im Betätigungsbereich entsteht. Erst bei einer definierten Abstandsänderung entscheidet die Kontrolleinheit, dass das Arbeitssignal für das Kraftfahrzeug bereitgestellt wird.

Eine die Erfindung verbessernde Maßnahme kann vorsehen, dass das Sensorsystem eine Überprüfung einer Abstandsänderung durchführt, um im Detektionsbereich und/oder im Betätigungsbereich einen Benutzer zu erkennen, der sich dem Kraftfahrzeug nähert, insbesondere dass das Sensorsystem erst dann eine Überprüfung einer Abstandsänderung durchführt, wenn der Benutzer sich in der Nahzone befindet. Hierdurch lässt sich Energie während der dauerhaften Überwachung des Detektionsbereichs einsparen. Des Weiteren kann das erfindungsgemäße Verfahren derart ausgebildet sein, dass das Sensorsystem Bilder des Detektionsbereiches und/oder des Betätigungsbereiches empfängt und/oder aufnimmt, wobei die Bilder gepulste Bilder und ungepulste Bilder sind, wobei die gepulsten Bilder durch die Reflexion eines emittierten, gepulsten Lichts des Sensorsystems entstehen und die ungepulsten Bilder durch das Licht des Detektionsbereiches und/oder Betätigungsbereiches entstehen, insbesondere dass die Pulsfrequenz des emittierten Lichtes im Ruhemodus geringer ist als im Arbeitsmodus.

Ein Erkennen des Benutzers gemäß Schritt b) oder gemäß d) erfolgt nur, wenn der Benutzer sich im Detektionsbereich oder im Betätigungsbereich bewegt. Hierzu können beispielsweise die Pixel, die das Objekt abbilden, von zwei zeitlich hintereinander aufgenommenen Bildern, insbesondere Erkennungsbildern, verglichen werden. Zusätzlich oder alternativ kann beispielsweise ein Abstand des Objektes zum optischen Sensor bei mindestens zwei zeitlich hintereinander aufgenommenen Bildern, insbesondere Erkennungsbildern, gemessen werden. Werden unterschiedliche Abstände detektiert, so hat sich das Objekt im Detektionsbereich bzw. im Betätigungsbereich bewegt. Um einen Abstand des Objekts zum optischen Sensor feststellen zu können, kann beispielsweise eine Time of Flight-Messung durchgeführt werden. Hierbei werden z. B. ein oder mehrere Lichtpulse ausgesandt und die Zeit, die der Lichtpuls zum Objekt und von dort zum optischen Sensor benötigt, gemessen. Die Zeit ist hierbei proportional zum Abstand des Objekts.

Zudem ist es erfindungsgemäß denkbar, dass im Schritt b) ein Benutzer im Detektionsbereich nur erkannt wird, wenn das Objekt sich in dem Detektionsbereich dem optischen Sensorsystem und/oder dem Kraftfahrzeug annähert. Das heißt, es ist nicht nur eine reine Bewegung des Objekts im Detektionsbereich ausreichend, um das Signal für den Start der Authentifizierungsüberprüfung auszulösen. Nur wenn sich der Abstand des Objekts zum optischen Sender und/oder zum Kraftfahrzeug verringert, wird ein Signal für den Start der Authentifizierungsüberprüfung ausgelöst. Hierzu wird der Abstand des Objekts zum optischen Sensor bei mindestens zwei zeitlich hintereinander aufgenommenen Bildern, insbesondere Erkennungsbildern, gemessen. Zur Messung des Abstandes kann eine Time of Flight-Messung durchgeführt werden. Falls lediglich der Benutzer sich im Detektionsbereich aufhält und sich dem optischen Sensorsystem nicht nähert, erfolgt keine Authentifizierungsüberprüfung, wodurch eine energiesparende Funktionsweise des erfindungsgemäßen Verfahrens erzielt wird. Lediglich eine signifikante Annäherung eines Benutzers oder eines Objekts innerhalb des Detektionsbereich triggert Schritt b). Insbesondere, wenn das Objekt oder der Benutzer in die Nahzone gelangt, erfolgt Schritt b).

Vorteilhafterweise wird die Überprüfung des Detektionsbereiches derart durchgeführt, dass die gepulsten Bilder mit den ungepulsten Bildern verglichen werden, insbesondere wird eine Überprüfung einer Abstandsänderung durchgeführt, bei der die gepulsten Bilder mit den ungepulsten Bildern verglichen werden. Hierbei kann sich jedes Bild auch aus einer Gesamtzahl an Pixeln zusammensetzen, wobei für die Überprüfung des Detektionsbereich und/oder des Betätigungsbereiches nur eine Anzahl an Pixeln überprüft wird, die geringer ist als die mögliche Gesamtzahl an Pixel.

Weiterhin lässt sich erfindungsgemäß das Verfahren derart weiterentwickeln, dass über definierte Bewegungen des Körperteils des Benutzers im Detektionsbereich und/oder Betätigungsbereich weitere Signale auslösbar sind, die weitere Fahrzeugfunktionen auslösen. Folgende Aktionen am Kraftfahrzeug sind denkbar:
- Öffnen und/oder Schließen eines Fensters des Kraftfahrzeuges,
- Öffnen und/oder Schließen der Motorhaube des Kraftfahrzeuges,
- Öffnen und/oder Schließen des Tankdeckels des Kraftfahrzeuges,
- Einschalten und/oder Ausschalten einer Standheizung oder einer Scheibenheizung des Kraftfahrzeuges,
- Einschalten und/oder Ausschalten einer Lichtfunktion des Kraftfahrzeuges,
- Einklappen und/oder Ausklappen eines Seitenspiegels des Kraftfahrzeuges,
- Einschalten und/oder Ausschalten einer Alarmanlage des Kraftfahrzeuges,
- Einstellen einer benutzerspezifischen Einstellung im Kraftfahrzeug, insbesondere der Sitzeinstellung des Fahrzeugsitzes,
   - Ein- und/oder Ausfahren einer Anhängerkupplung.

Die Anforderungen an das Erkennen eines Benutzers in Schritt b) und/oder d), das heißt, die Detektionsdauer, die Größe des Objektes, die Bewegung des Objektes, die Annäherung des Objektes, etc. können beliebig kombiniert werden. So kann es beispielsweise sein, dass das Objekt eine vorgegebene Größe haben und sich dem optischen Sensor annähern muss, um als Benutzer erkannt zu werden und ein Signal für den Start einer Authentifizierungsüberprüfung auszulösen.

Das erfindungsgemäße Verfahren kann ein Sensorsystem mit einem Lichtmodul aufweisen, das Licht emittiert, sodass ein Sendebereich entsteht, wobei der Sensor einen Empfangsbereich aufweist, der sich mit dem Sendebereich zumindest teilweise überschneidet, wobei der Bereich der Überschneidung der Detektionsbereich ist. Das bedeutet, dass der Detektionsbereich durch die Überlagerung von einem Sendebereich des Lichtmoduls und einem Empfangsbereich des optischen Sensors gebildet sein kann. Der Sendebereich des Lichtmoduls ergibt sich aus dem Bereich, aus dem das Lichtmodul Licht von ausreichender Intensität emittiert. Der Empfangsbereich ergibt sich aus dem Bereich, aus dem der optische Sensor Licht empfangen kann. Der Sendebereich des Lichtmoduls kann aus den Sendebereichen der einzelnen Lichtquellen zusammengesetzt sein. Alternativ kann der Sendebereich auf die Überlagerung der Sendebereiche der einzelnen Lichtquellen beschränkt sein.

Vorzugsweise sendet während des Schritts b) der ID-Geber einen Authentifizierungscode an das Zugangskontrollsystem des Kraftfahrzeuges und das Zugangskontrollsystem vergleicht den Authentifizierungscode mit einem gespeicherten Code und im Falle einer Übereinstimmung wird ein Entriegelungssignal ausgelöst. Vorteilhafterweise erfolgt Schritt d) nur im Falle einer definierten Bewegung eines Körperteils des Benutzers im/am Betätigungsbereich, insbesondere ist das Körperteil ein Fuß oder eine Hand des Benutzers.

In einer möglichen Ausführungsform der Erfindung befindet sich der Betätigungsbereich auf dem Boden, auf den der Benutzer für den Schritt d) seinen Fuß zu stellen hat, insbesondere der Benutzer lediglich für eine definierte Zeit seinen Fuß zu stellen hat, um gemäß des Schrittes d) ein Arbeitssignal auszulösen. Das kann bedeuten, dass der Benutzer seinen Fuß auf den Boden durch den Betätigungsbereich zu stellen hat. Erfindungsgemäß kann das Verfahren derart ausgeführt sein, dass innerhalb eines definierten Zeitfensters der Benutzer seinen Fuß in den Betätigungsbereich zu stellen hat. Erfolgt dies nicht durch den Benutzer, kann Schritt d) nicht ausgelöst werden.

Ebenfalls ist es denkbar, dass der Betätigungsbereich in einem Abstand zum Boden und zum Sensorsystem sich befindet, wobei insbesondere der Betätigungsbereich ein Hologramm aufweist. Erfindungsgemäß kann der Betätigungsbereich beispielsweise in Höhe des Sensorsystems, beispielsweise in einem geringen Abstand zum Kraftfahrzeug sich befinden. Der Benutzer muss lediglich in diesen Betätigungsbereich mit einem Körperteil sich begeben, um das Arbeitssignal für das Kraftfahrzeug entstehen zu lassen.

Weitere die Erfindung verbessernde Maßnahmen ergeben sich aus der nachfolgenden Beschreibung zu den Ausführungsbeispielen der Erfindung, welche in den Figuren schematisch dargestellt sind. Sämtliche aus den Ansprüchen der Beschreibung oder Zeichnungen der vorgegebenen Merkmale oder Vorteile, einschließlich konstruktiver Einzelheiten, räumlicher Anordnung und Verfahrensschritte können sowohl für sich als auch in den verschiedensten Kombinationen erfindungswesentlich sein:
- Fig. 1: eine schematische Ansicht eines Montagemoduls für ein Kraftfahrzeug mit einem optischen Sensorsystem, das einen Detektionsbereich und einen Betätigungsbereich überwacht,
- Fig. 2: eine schematische Draufsicht auf ein Kraftfahrzeug, das mit einem optischen Sensorsystem gemäß Figur 1 ausgestattet ist,
- Fig. 3: eine schematische Draufsicht auf ein Kraftfahrzeug mit einem optischen Sensorsystem gemäß Figur 1,
- Fig. 4: eine schematische Darstellung bezüglich eines Lichtmoduls eines optischen Sensorsystems,
- Fig. 5: eine Draufsicht auf ein Kraftfahrzeug, das ein Montagemodul mit einem optischen Sensorsystem aufweist,
- Fig. 6: eine Seitenansicht des Kraftfahrzeuges gemäß Figur 5,
- Fig. 7: eine weitere Ansicht auf ein Kraftfahrzeug mit einem Montagemodul gemäß Figur 1,
- Fig. 8: ein weiteres Ausführungsbeispiel eines Montagemoduls mit einem optischen Sensorsystem zur Überwachung eines Detektionsbereiches und eines Betätigungsbereiches,
- Fig. 9: ein Ausführungsbeispiel eines Kraftfahrzeugemblems, in dem ein optisches Sensorsystem zur Überwachung eines Detektionsbereiches und eines Betätigungsbereiches integriert ist,
- Fig. 10: eine Darstellung der Strahlungsintensität über die Zeit, die von einem optischen Sensorsystem zur Überwachung des Detektionsbereiches und/oder des Betätigungsbereiches emittiert wird,
- Fig. 11: eine schematische Ansicht auf einen optischen Sensor des Sensorsystems,
- Fig. 12: eine Darstellung auf den optischen Sensor gemäß Figur 11, der in einem Auswertemodus betrieben wird,
- Fig. 13: der optische Sensor gemäß Figur 12, der in einem zweiten Auswertemodus betrieben wird,
- Fig. 14: ein möglicher Verfahrensablauf, der ein Montagemodul bezüglich Figur 1 bis Figur 13 betreiben kann,
- Fig. 15: eine schematische Darstellung des Sensorsystems, welches eine Überprüfung einer Abstandsänderung durchführt.

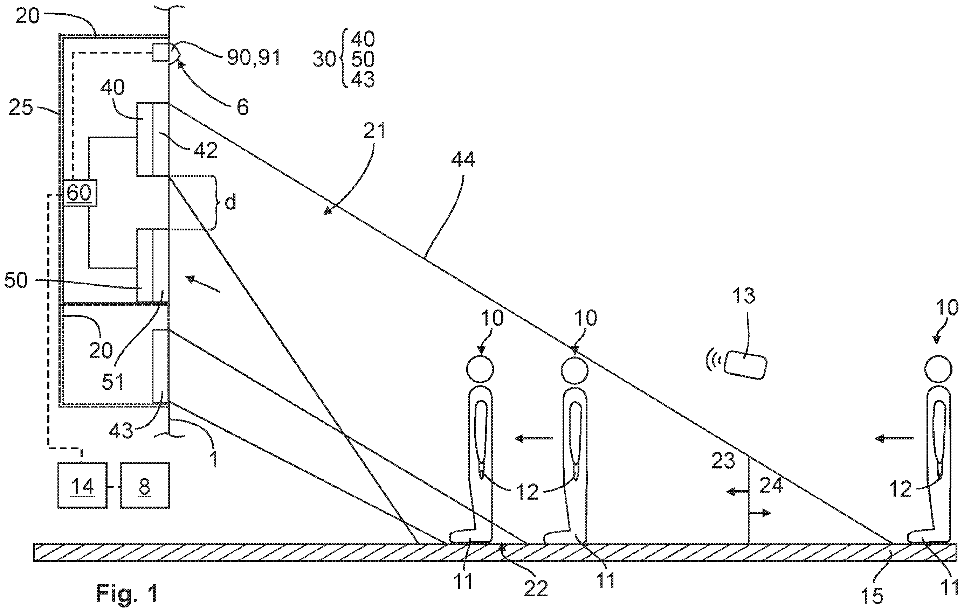

Figur 1 zeigt ein Montagemodul 20, das in ein Kraftfahrzeug 1 einsetzbar ist. Das Montagemodul 20 weist ein optisches Sensorsystem 30 auf, welches geeignet ist, das nahe Umfeld des Kraftfahrzeuges 1 zu überwachen. Das Montagemodul 20 ist mit einer Kraftfahrzeugelektronik, die im Kraftfahrzeug 1 integriert ist, elektronisch verbunden, wobei über eine Erkennung eines Benutzers 10 ein Arbeitssignal für das Kraftfahrzeug 1 erzeugbar ist, um beispielsweise ein Entriegeln und/oder ein Verriegeln und/oder Öffnen und/oder Verschließen eines beweglichen Teils 2, 3 des Kraftfahrzeuges 1 auszulösen. Das bewegliche Teil 2, 3 kann z. B. eine Heckklappe 2 oder eine Seitentür 3 bzw. eine Schiebetür 3 sein.

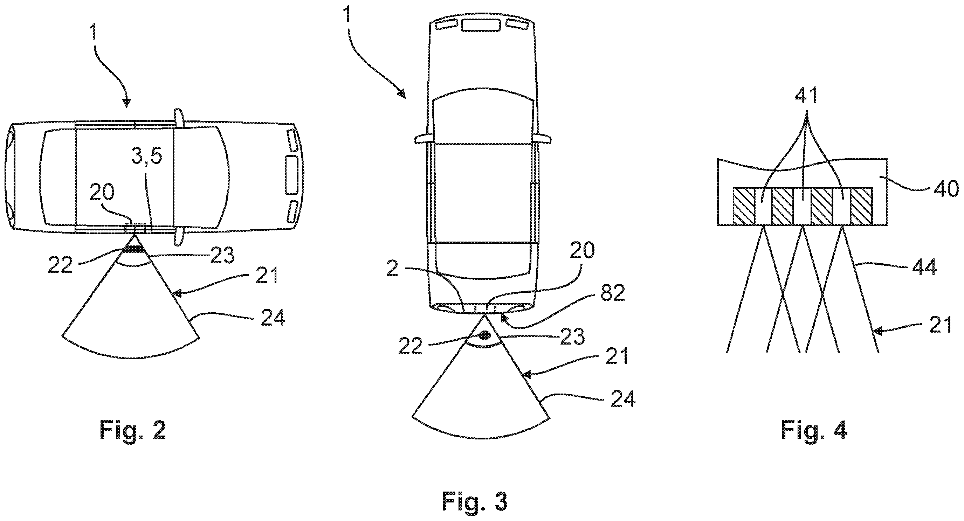

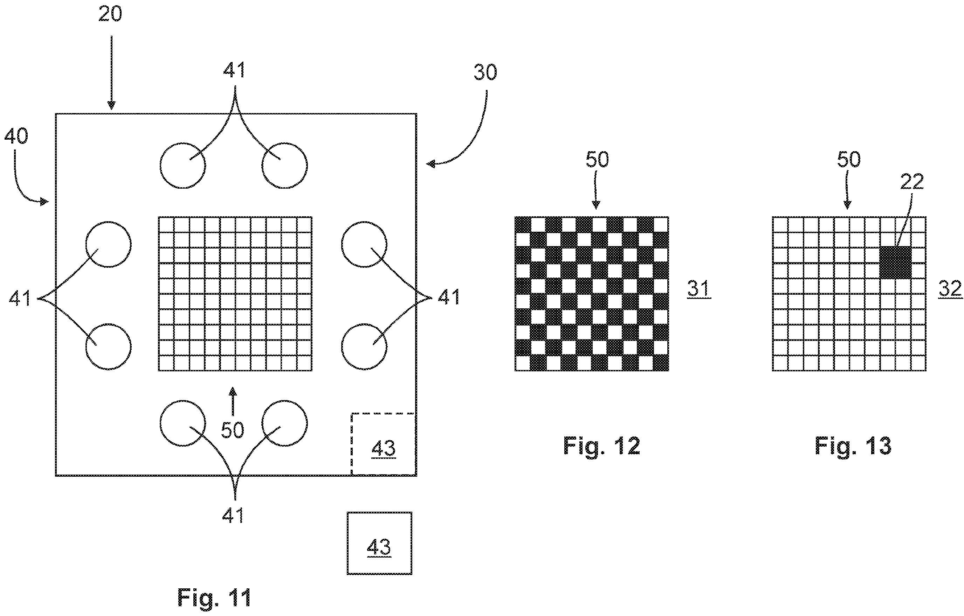

Das optische Sensorsystem 30 weist einen optischen Sensor 50 und ein Lichtmodul 40 auf, wobei das Lichtmodul 40 Licht 44 emittieren kann, wodurch ein Detektionsbereich 21 entsteht. Zudem umfasst das Montagemodul 20 ein Anzeigeelement 43, das einen Betätigungsbereich 22 entstehen lassen kann. Zudem weist das Lichtmodul 40 eine Vielzahl an Lichtquellen 41 auf, welches in Figur 4 und Figur 11 schematisch gezeigt ist. Das Lichtmodul 40 weist zudem einen Abstand zum optischen Sensor 50 auf, der im vorliegenden Ausführungsbeispiel in einem Bereich d liegen kann, der zwischen 1 cm ≤ d ≤ 3 cm liegt. Der optische Sensor 50 ist derart ausgebildet, dass Licht 44 aus dem Detektionsbereich 21 und/oder aus dem Betätigungsbereich 22 empfangen wird. In den dargestellten Ausführungsbeispielen ist der Detektionsbereich 21 für den Benutzer 10 nicht sichtbar, wobei das Lichtmodul 40 derart ausgebildet ist, dass das emittierte Licht 44 IR-Strahlen sind.

Das Lichtmodul 40 gemäß Figur 1 kann ein Linsensystem 42 aufweisen, das beispielsweise zusätzlich mit einem Filter, der explizit nicht dargestellt ist, ausgeführt sein kann. Zudem ist in Figur 1 eine Kontrolleinheit 60 dargestellt, die geeignet ist, Daten des Sensors 50 auszuwerten. Zudem kann die Kontrolleinheit 60 weitere Funktionen übernehmen, worauf im Folgenden noch einzugehen ist. Vorteilhafterweise ist die Kontrolleinheit 60 innerhalb des Montagemoduls 20 integriert. Ebenfalls kann es denkbar sein, dass die Kontrolleinheit 60 kraftfahrzeugseitig angeordnet ist, wobei eine elektronische Verbindung zwischen Kontrolleinheit und Montagemodul 20 bzw. dem optischen Sensorsystem 30 besteht.

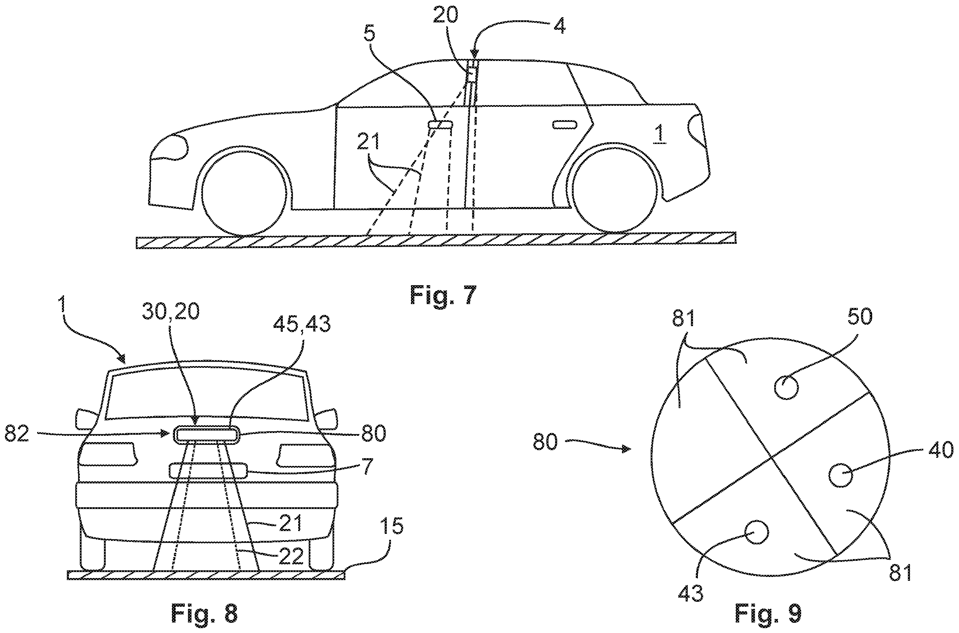

Das Montagemodul 20 gemäß sämtlicher Ausführungsbeispiele ist in einer Aufnahme 25 angeordnet, die zur Montage des Montagemoduls 20 an dem Kraftfahrzeug 1 ausgebildet ist. Das Montagemodul 20 und/oder die Aufnahme 25 sind gemäß aller Ausführungsbeispiele geeignet, am Kraftfahrzeugheck (Figur 3, Figur 5, Figur 6 und Figur 8) oder an einer Fahrzeugseite (Figur 2 und Figur 7) angeordnet zu werden. Beispielsweise kann das Montagemodul 20 an der B-Säule 4 des Kraftfahrzeuges 1 (s. Figur 7) befestigt werden. Ebenfalls umfasst die Erfindung, dass das erfindungsgemäße Montagemodul 20 zumindest teilweise im Türgriff 5, wie in Figur 7 schematisch gezeigt ist, integriert ist.

Figur 1 zeigt, dass das Montagemodul 20 an einer Griffleiste 6 des Kraftfahrzeuges 1 vorgesehen ist, wobei die Griffleiste beispielsweise Bestandteil eines Türgriffes oder eines Heckgriffes sein kann. Der optische Sensor 50 kann zudem mit einem Linsensystem 51 ausgestattet sein, welches in Figur 1 gezeigt ist. In Figur 8 und Figur 9 ist das Ausführungsbeispiel gezeigt, bei dem das Montagemodul 20 in einem Emblem 80 des Kraftfahrzeuges 1 vorgesehen ist. Das Lichtmodul 40 sowie das Anzeigeelement 43 sind derart ausgerichtet, dass der Betätigungsbereich 22 wesentlich kleiner ist als der Detektionsbereich 21.

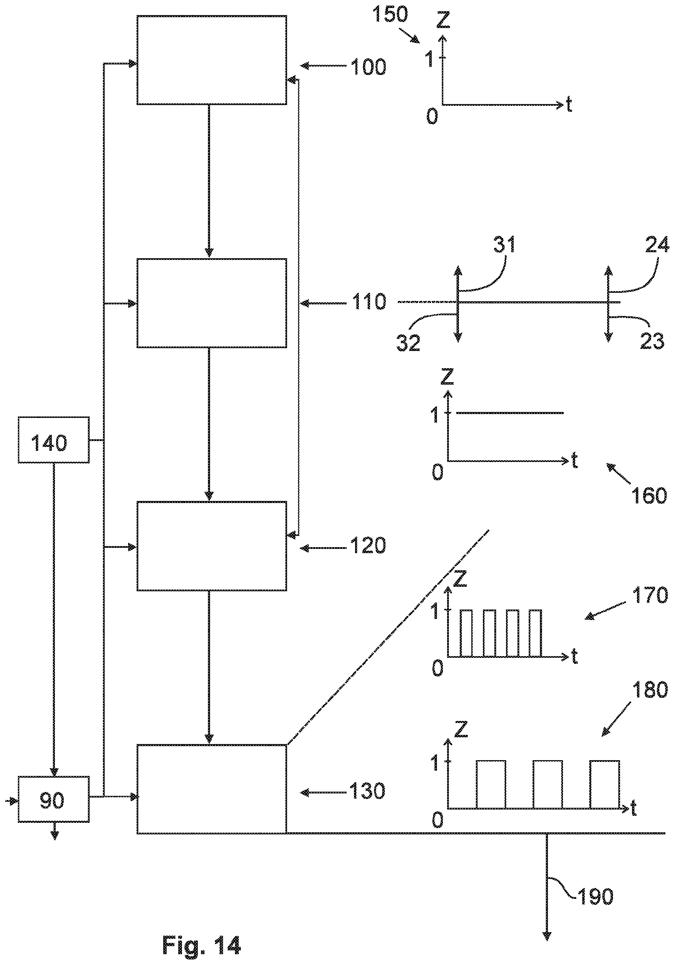

In Figur 8 und Figur 9 weist zudem das optische Sensorsystem 30 ein Beleuchtungselement 45 auf, um unterschiedliche Beleuchtungszustände für den Benutzer 10 sichtbar zu machen, die exemplarisch in Figur 14 gezeigt sind. Das Beleuchtungselement 45 kann auch als Anzeigeelement 43 arbeiten, worauf im Folgenden noch eingegangen wird. Gemäß Figur 9 weist das Emblem 80 unterschiedliche Felder 81 auf, wobei jeweils in einem Feld 81 eines der folgenden Bauteile angeordnet ist: Lichtmodul 40, Anzeigeelement 43, optischer Sensor 50. Ebenfalls kann vorgesehen sein, dass in einem der Felder 81 das Beleuchtungselement 45 integriert sein kann. Zudem ist es im Rahmen der Erfindung denkbar, dass das Emblem 80 beweglich am Kraftfahrzeug 1 angeordnet ist. In einer ersten Lage könnte z. B. das optische Sensorsystem 30 geschützt hinter dem Emblem 80 sich befinden. In einer zweiten Lage ist es denkbar, dass eine Überprüfung des Detektionsbereiches 21 und/oder des Betätigungsbereiches 22 ausführbar ist.

Gemäß Figur 1 ist es denkbar, dass das Anzeigeelement 43 kraftfahrzeugseitig und nicht im Montagemodul 20 angeordnet ist. Das Anzeigeelement 43 steht in elektrischer Verbindung mit der Kontrolleinheit 60. Des Weiteren ist es gemäß Figur 1 denkbar, eine Notbetätigung 90 innerhalb des Montagemoduls 20 vorzusehen, wobei über eine Aktivierung der Notbetätigung 90 mit einem Körperteil 12 des Benutzers 10 ein Arbeitssignal für das Fahrzeug 1 bereitgestellt werden kann. Diese Notbetätigung 90 ermöglicht es dem Benutzer 10, das genannte Arbeitssignal für das Kraftfahrzeug 1 auszulösen, wenn etwaig das optische Sensorsystem 30 verschmutzt oder etwaig in der Funktionsweise gestört ist. Die Notbetätigung 90 kann in einem derartigen Fall vom Benutzer 10 aktiviert werden, um das Arbeitssignal für das Kraftfahrzeug 1 auszulösen. Hierbei weist die Notbetätigung 90 ein Aktivierungsmittel 91 auf, das z. B. ein Taster oder ein Schalter sein kann, wobei das Aktivierungsmittel 91 kapazitiv oder induktiv oder berührungslos funktionieren kann. Ebenfalls kann das Aktivierungsmittel ein Piezoelement sein. Falls das Sensorsystem 30 eine höhere Verschmutzung aufweist, sodass das optische Sensorsystem 30 nicht ausreichend den Detektionsbereich 21 und/oder Betätigungsbereich 22 überwachen kann, ist das Sensorsystem 30 in der Lage, mit einer erhöhten Leistung betrieben zu werden, wodurch eine zufriedenstellende Überwachung des Detektionsbereiches 21 und/oder des Betätigungsbereiches 22 möglich ist.

Das optische Sensorsystem 30 kann gemäß Figur 1 den außerhalb des Kraftfahrzeugs 1 liegenden Bereich überwachen, insbesondere einen Detektionsbereich 21 überwachen, wobei der Detektionsbereich in eine Nahzone 23 und eine Fernzone 24 aufgeteilt ist. Die Nahzone 23 weist einen geringeren Abstand zum Sensorsystem 30 auf als die Fernzone 24. Das erfindungsgemäße Sensorsystem 30 bewacht dauerhaft den Detektionsbereich 21, und zwar auch dann, wenn der Benutzer 10 sich außerhalb des Detektionsbereichs 21 befindet. Die Überwachung des Detektionsbereiches 21 ist schematisch auch in Figur 14 mit dem Bezugszeichen 100 dargestellt. Gelangt nun der Benutzer 10 innerhalb des Detektionsbereichs 21 in die Nahzone 23, erfolgt ein Signal für den Start einer Authentifizierungsüberprüfung zwischen einem ID-Geber 13, den der Benutzer bei sich trägt, und dem Kraftfahrzeug 1, welches mit dem Bezugszeichen 110 gemäß Figur 14 schematisch gezeigt ist. Liegt eine positive Authentifizierung vor, das bedeutet, dass der Benutzer 10 mit seinem ID-Geber 13 berechtigt ist, ein Arbeitssignal für das Kraftfahrzeug 1 bereitzustellen, erfolgt der Verfahrensschritt 120 gemäß Figur 14, bei dem ein außerhalb des Kraftfahrzeuges 1 liegender, sich vom Detektionsbereich 21 unterscheidender Betätigungsbereich 22 überwacht wird. Gemäß sämtlicher Ausführungsbeispiele sendet das Sensorsystem 30 Licht im für den Benutzer nicht sichtbaren Bereich aus, wodurch der Detektionsbereich 21 entsteht. Das Sensorsystem 30, insbesondere das Lichtmodul 40, sendet gepulstes Licht aus. Der Benutzer 10 kann nun den Betätigungsbereich 22 über eine definierte Bewegung, Gestik, etc. aktivieren, welches durch das Sensorsystem 30 erkannt wird. Im Falle eines Erkennens des Benutzers 10 im Betätigungsbereich 22, erfolgt eine Bereitstellung des Arbeitssignals für das Kraftfahrzeug 1, welches im Verfahrensschritt 130 gemäß Figur 14 gezeigt ist.

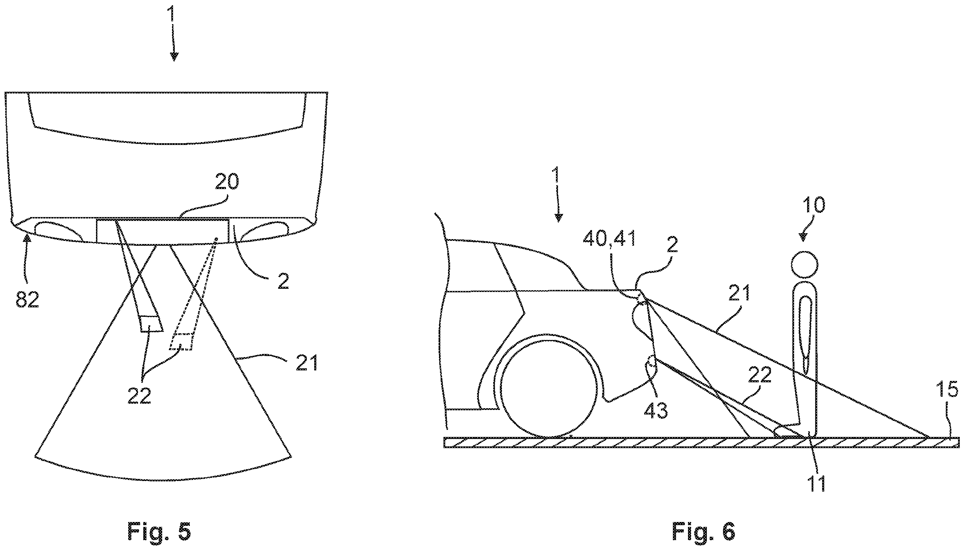

Das Montagemodul 20 kann mit einem Zugangskontrollsystem 14 des Kraftfahrzeuges 1 in Datenkommunikation stehen, wobei beispielsweise ein Türschloss 8 über das Arbeitssignal entsprechend angesprochen werden kann, damit es entriegeln und/oder verriegeln kann, um eine Heckklappe oder eine Tür des Kraftfahrzeuges 1 beispielsweise öffnen oder schließen zu können. Die definierte Gestik des Benutzers 10 in dem Betätigungsbereich 22 kann unterschiedlich sein, beispielsweise kann es vorgesehen sein, dass der Benutzer 10 mit seinem Fuß 11 auf den sichtbaren Betätigungsbereich 22 tritt (siehe Figur 6). Gemäß Figur 5 ist eine weitere Variante gezeigt, in der zwei Betätigungsbereiche 22 visualisiert werden, die der Benutzer 10 zu aktivieren hat, um den Verfahrensschritt mit dem Bezugszeichen 130 gemäß Figur 14 zu aktivieren. Besonders vorteilhaft ist, dass der Detektionsbereich 21 dauerhaft überwacht wird, insbesondere auch dann, wenn der Benutzer gemäß Figur 1 sich außerhalb des Detektionsbereichs 21 befindet. Gemäß Figur 1 liegt der Betätigungsbereich 22 innerhalb des Detektionsbereiches 21, wobei bei der Überwachung des Betätigungsbereiches 22 das Lichtmodul 40 weiterhin nicht sichtbares Licht aussendet, wodurch der Detektionsbereich 21 sich bildet, wobei der optische Sensor 50 gleichzeitig den Betätigungsbereich 22 überprüft. Hierbei empfängt der Sensor 50 Licht aus dem Detektionsbereich 21 sowie Licht aus dem Betätigungsbereich 22. Diese Daten und/oder Signale werden vom Bildsensor 50 aufgenommen, wobei die Kontrolleinheit 60 die Auswertung der Daten durchführt. Die Kontrolleinheit 60 kann auch im Bildsensor, insbesondere dem optischen Sensor 50 integriert sein.

Gemäß Figur 4 ist gezeigt, dass das Sensorsystem 30 gemäß sämtlicher Ausführungsbeispiele eine Vielzahl an Lichtbündel 44 emittieren kann, die zusammengesetzt den Detektionsbereich 21 bilden. Somit weist das Lichtmodul 40 eine Vielzahl an Lichtquellen 41 auf, die jeweils einzelne Lichtbündel 44 in den Außenbereich des Kraftfahrzeuges 1 aussenden, um den Detektionsbereich 21 entstehen zu lassen. Ein Vorteil ist hierbei, dass die Lichtintensität der einzelnen Lichtquellen 41 wesentlich reduziert werden kann, wodurch der Energieverbrauch des optischen Sensorsystems 30 reduziert werden kann.

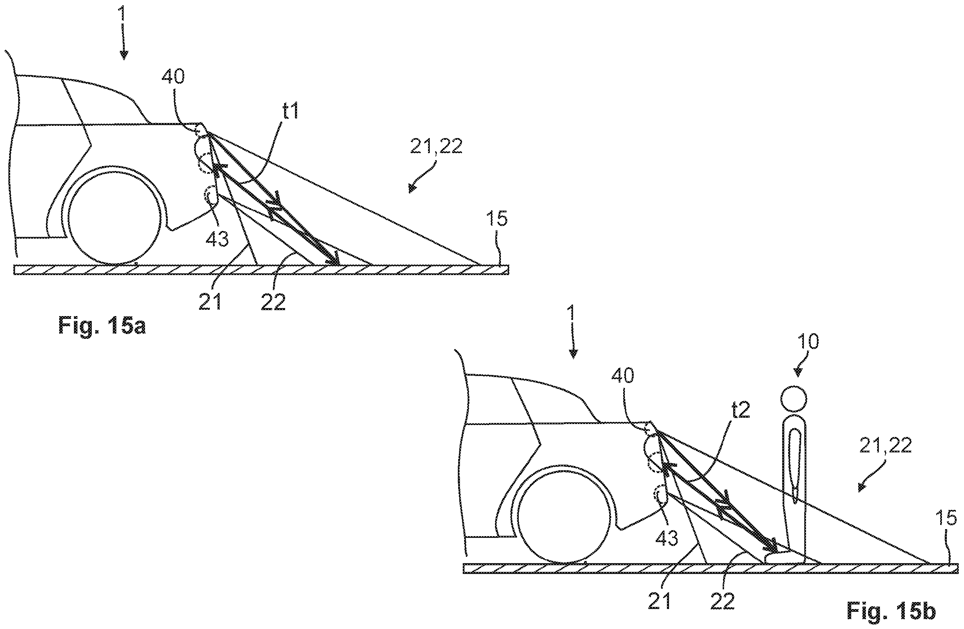

In Figur 15 ist schematisch das Sensorsystem 30 gezeigt, welches in Figur 1 sowie in den übrigen Ausführungsbeispielen eine Überprüfung einer Abstandsänderung durchführen kann, um im Detektionsbereich 21 und/oder im Betätigungsbereich 22 einen Benutzer 10 zu erkennen, der sich dem Kraftfahrzeug 1 nähert. Das Lichtmodul 40 sendet nicht sichtbares Licht in Richtung Betätigungsbereich 22 aus, welches die Zeit t₁ benötigt, um das Lichtmodul 40 zu verlassen und durch den optischen Sensor 50 empfangen zu werden. Nähert sich nun ein Benutzer 10 dem Betätigungsbereich 22, welches in Figur 15 b dargestellt ist, benötigt das Licht 44 die Zeit t₂, um vom Lichtbündel 40 zum optischen Sensor 50 zu gelangen. Somit erhält das erfindungsgemäße Verfahren die wertvolle Information, dass sich ein Benutzer 10 dem Kraftfahrzeug 1 nähert. Vorteilhafterweise wird eine Abstandsüberprüfung erst dann durchgeführt, wenn der Benutzer 10 sich in der Nahzone 23 befindet. Somit lässt sich der Energieaufwand des Montagemoduls während des Betriebs gering halten. Gemäß sämtlicher Ausführungsbeispiele kann das Sensorsystem 30 Bilder des Detektionsbereichs 21 sowie des Betätigungsbereichs 22 empfangen. Die Bilder sind vorteilhafterweise gepulste Bilder und ungepulste Bilder, wobei die gepulsten Bilder durch eine Reflexion eines emittierten, gepulsten Lichts 44 des Sensorsystems 30 entstehen und die ungepulsten Bilder durch das Licht des Detektionsbereichs 21 und des Betätigungsbereichs 22 entstehen. Über die Verwendung von gepulsten Lichts können wirkungsvoll Störlichter aus der Umgebung herausgerechnet werden, sodass eine zuverlässige Überwachung des Detektionsbereiches 21 und des Betätigungsbereiches 22 durchführbar ist.

Bei der Überprüfung des Detektionsbereiches 21 sowie des Betätigungsbereiches 22 werden die gepulsten Bilder mit den ungepulsten Bildern verglichen, wobei die genannte Überprüfung der Abstandsänderung durchgeführt wird, bei der die gepulsten Bilder mit den ungepulsten Bildern verglichen werden. Damit das erfindungsgemäße Montagemodul 20 möglichst wenig Energie verbraucht, ist das Sensorsystem 30 zwischen einem Ruhemodus 31 und einem Arbeitsmodus 32 schaltbar, welches in Figur 14 dargestellt ist. Gemäß Figur 11 ist schematisch der Sensor 50 mit den benachbart dazu angeordneten Lichtquellen 41 dargestellt. Das Anzeigeelement 43 kann im Lichtmodul 40 integriert sein. Ebenfalls ist es denkbar, das Anzeigeelement 43 beabstandet zum Lichtmodul 40 anzuordnen. Der Sensor 50 weist eine Vielzahl an rasterförmigen Pixeln auf. Figur 12 zeigt den Ruhemodus 31 des optischen Sensors 50 an, bei dem lediglich die Hälfte der Pixel ausgewertet wird. Figur 9 zeigt den Arbeitsmodus 32 an, in dem lediglich 4 Pixel überprüft und ausgewertet werden, die dem Betätigungsbereich 22 entsprechen. Bei den übrigen Pixeln handelt es sich um nicht ausgewertete Pixel. Die weiß gezeigten Pixel gemäß Figur 8 und Figur 9 werden bei der Auswertung nicht berücksichtigt, sodass Energie während des Betriebs des Montagemoduls 20 einsparbar ist.

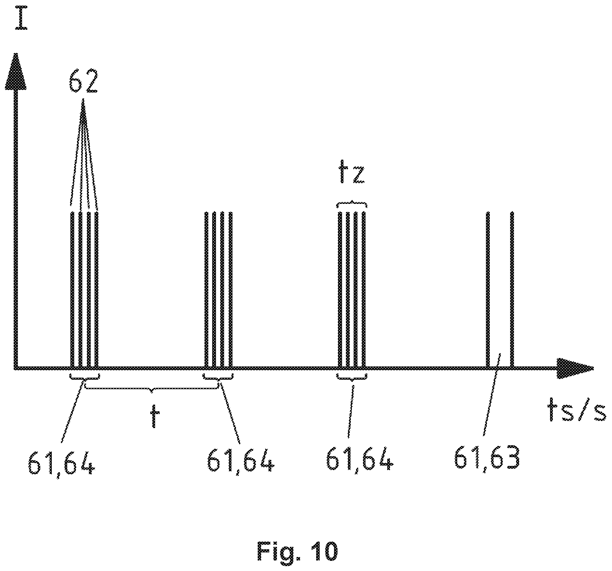

Figur 10 enthält eine Auftragung einer Lichtintensität I über die Zeit ts. Wie dargestellt ist, wird mit Hilfe des Sensors 50 nach jeder Zeitspanne t ein Bild 61 aufgenommen, wobei in der Figur 10 jeweils die Zeitspanne dargestellt ist, die für ein Bild 61 benötigt wird. Hierbei kann es sich um ein Erkennungsbild 64 oder ein Vergleichsbild 63 handeln. Das Erkennungsbild 64 ist mit Hilfe von Lichtpulsen 62 des Lichtmoduls 40 aufgenommen worden. Hierbei ist eine Vielzahl von Lichtpulsen 62 notwendig, um ein Bild 61 zu erzeugen. Die Lichtpulse 62 werden mit einer vorgegebenen Pulsfrequenz vom Lichtmodul 40 emittiert. Hierbei kann die Pulsfrequenz während des Ruhemodus 31 geringer sein als die des Arbeitsmodus 32. Ebenso kann die Bildfrequenz, die sich durch die Zeitspanne t ergibt, in einem Ruhemodus 31 geringer sein als in einem Arbeitsmodus 32. Das von dem Sensor 50 empfangene Licht der Lichtpulse 62 eines Bildes 61 wird aufintegriert oder aufsummiert, um das Bild 61 zu erzeugen. Um eine Abstandsmessung durchzuführen, gibt das optische Sensorsystem 30 ein Zeitintervall tz vor, in dem die Lichtpulse 62 ein Bild 61 erzeugen. Der Abstand des Benutzers 10 zum optischen Sensor 50 wird in Abhängigkeit von der Intensität der Lichtpulse 62 im Zeitintervall tz bestimmt. In dem Vergleichsbild 63 wird ein Bild 61 aufgenommen, ohne dass Lichtpulse 62 des Lichtmoduls 40 den Bildsensor 50 erreichen. Hierzu emittiert das Lichtmodul 40 kein Licht. Die Pulsung des Lichtes gemäß Figur 10 ist beispielsweise in Figur 1 sowie in sämtlichen Ausführungsbeispielen anwendbar, um insbesondere Störlichter herauszurechnen.

Gemäß sämtlicher Ausführungsbeispiele kann der Betätigungsbereich 22 sich am Boden 15 befinden. Ebenfalls ist es denkbar, dass sich der Betätigungsbereich 21 in einem Abstand zum Boden 15 und auf Höhe des Sensorsystems 30 insbesondere auf Höhe des Emblems 80 befindet. Der Betätigungsbereich 22 sollte lediglich für den Benutzer 10 sichtbar sein, um über eine entsprechende Handlung, Gestik diesen Betätigungsbereich 22 anzusprechen. Beispielsweise kann der Betätigungsbereich 22 derart ausgestaltet sein, dass ein Hologramm für den Benutzer 10 entsteht, der z. B. freischwebend vor dem optischen Sensorsystem 30 beabstandet vom Kraftfahrzeug 1 und dem Boden 15 vom Benutzer zu aktivieren ist. Selbstverständlich schließt die Erfindung mit ein, dass weitere Signale am Kraftfahrzeug auslösbar sind, wie z. B. die Bewegung einer Fensterscheibe, falls der Benutzer 10 die entsprechende Handlung im Verfahrensschritt 130 gemäß Figur 14 ausübt.

Gemäß Figur 8 und Figur 9 weist das optische Sensorsystem 30 ein Beleuchtungselement 45 auf, das in unterschiedliche Beleuchtungszustände geschaltet werden kann, die schematisch in Figur 14 gezeigt sind. Während der Überwachung des Detektionsbereiches 21 im Verfahrensschritt 100, ist das Beleuchtungselement 45 deaktiviert und emittiert somit kein Licht, welches mit dem Bezugszeichen 150 gezeigt ist. Falls die Authentifizierungsüberprüfung im Verfahrensschritt 110 positiv ist, nimmt das Beleuchtungselement 45 einen ersten Beleuchtungszustand ein, der das Bezugszeichen 160 gemäß Figur 14 trägt. Im vorliegenden Ausführungsbeispiel entsteht ein dauerhaftes Licht am Beleuchtungselement 45, welches vom Benutzer 10 erkannt werden kann. Nun erfolgt der Verfahrensschritt 120, bei dem der Betätigungsbereich 22 durch das Sensorsystem 30 überprüft wird. Der erste Beleuchtungszustand 160 gibt dem Benutzer 10 die Information, seine Hand in die Nähe des Emblems 80 zu bewegen, insbesondere den Betätigungsbereich 22, der in der Nähe des Emblems 80 liegt, zu aktivieren. Ist dies durch den Benutzer 10 erfolgt, wechselt das Beleuchtungselement 45 in den zweiten Beleuchtungszustand 170, das ein Blinksignal darstellt. Hierdurch erhält der Benutzer 10 die Information, seine Hand aus dem Betätigungsbereich 22 zu entfernen. Anschließend wechselt das Beleuchtungselement 45 in einen dritten Beleuchtungszustand 180, welches ebenfalls ein Blinksignal ist, wobei die einzelnen Lichtsignale länger aktiv sind als die kürzeren Lichtsignale aus dem Beleuchtungszustand 170.

Das Erkennen einer Verschmutzung oder eines Defekts kann im Verfahrensschritt 140 erfolgen, wobei die Kontrolleinheit 60 beispielsweise die Information des Verfahrensschritts 140 erhält. Z. B. ist es denkbar, dass gemäß des Verfahrensschritts 140 die Notbetätigung 90 aktiviert wird bzw. betriebsbereit geschaltet wird, damit eine manuelle Betätigung der Notbetätigung 90 durch den Benutzer 10 ein Arbeitssignal für das Fahrzeug 1 gemäß Verfahrensschritt 130 auslösen kann.

Das Montagemodul 20 gemäß Figur 1 ist sowohl im Heckbereich 82 gemäß Figur 5, Figur 6 und Figur 8 einsetzbar als auch im Seitenbereich des Kraftfahrzeuges gemäß Figur 7. Hierbei sind die Verfahrensschritte gemäß Figur 14 auf sämtliche Ausführungsbeispiele gemäß Figur 1 bis Figur 9 sowie Figur 15 anwendbar. Figur 9 kann das Montagemodul 20 und/oder die Verfahrensschritte gemäß Figur 14 mit enthalten. Figur 8 kann auch derart weitergebildet sein, dass das Beleuchtungselement 45 als Anzeigeelement 43 gemäß Figur 1 arbeitet. Zudem ist es denkbar, dass eine Beleuchtung des Nummernschildes 7 (Figur 8) über das Anzeigeelement 43 und/oder das Beleuchtungselement 45 zusätzlich erfolgen kann. Gemäß Figur 2 und Figur 3 wird schematisch sehr deutlich, dass zwar ein sehr großer Detektionsbereich 21 über das erfindungsgemäße optische Sensorsystem 30 überwacht werden kann. Da jedoch die Nahzone 23 sowie der Betätigungsbereich 22 sehr klein ist, verglichen zum Detektionsbereich 21, kann der Betrieb des optischen Sensorsystems 30 energiesparend durchgeführt werden. Einen wesentlichen Beitrag für die Energieeinsparung liefert die Idee, dass das optische Sensorsystem 30 zwischen einem Ruhemodus 31 und einem Arbeitsmodus 32 schaltbar ist und eine Authentifizierungsüberprüfung gemäß Schritt 110 erst dann durchführbar ist, wenn der Benutzer 10 sich in der Nahzone 23 befindet.

### Bezugszeichenliste

- 1: Kraftfahrzeug
- 2: Heckklappe (bewegliches Teil)
- 3: Seitentür, Schiebtür (bewegliches Teil)
- 4: B-Säule
- 5: Türgriff
- 6: Griffleiste
- 7: Nummernschild
- 8: Türschloss
- 10: Benutzer
- 11: Fuß
- 12: Hand
- 13: ID-Geber
- 14: Zugangskontrollsystem
- 15: Boden
- 20: Montagemodul
- 21: Detektionsbereich
- 22: Betätigungsbereich
- 23: Nahzone
- 24: Fernzone
- 25: Aufnahme
- 30: optisches Sensorsystem
- 31: Ruhemodus
- 32: Arbeitsmodus
- 40: Lichtmodul
- 41: Lichtquelle
- 42: Linsensystem
- 43: Anzeigeelement
- 44: Licht, Lichtbündel, Lichtkegel
- 45: Beleuchtungselement
- 50: optischer Sensor
- 51: Linsensystem
- 60: Kontrolleinheit
- 61: Bild gepulst
- 62: Lichtpuls
- 63: Vergleichsbild
- 64: Erkennungsbild
- 80: Emblem
- 81: Felder
- 82: Kraftfahrzeugheck
- 90: Notbetätigung
- 91: Aktivierungsmittel, Taster, Schalter
- 100: Verfahrensschritt
- 110: Verfahrensschritt
- 120: Verfahrensschritt
- 130: Verfahrensschritt
- 140: Verfahrensschritt
- 150: Beleuchtungszustand
- 160: Beleuchtungszustand
- 170: Beleuchtungszustand
- 180: Beleuchtungszustand

## Patentansprüche

1. Montagemodul (20) für ein Kraftfahrzeug (1), mit
einem optischen Sensorsystem (30), das geeignet ist,
a) einen außerhalb des Fahrzeuges (1) liegenden Detektionsbereich (21) zu überwachen,
b) im Falle eines Erkennens eines Benutzers (10) im Detektionsbereich (21) ein Signal für den Start einer Authentifizierungsüberprüfung zwischen einem ID-Geber (13) und dem Kraftfahrzeug (1) auszulösen,
c) einen außerhalb des Fahrzeuges (1) liegenden, sich vom Detektionsbereich (21) unterscheidenden Betätigungsbereich (22) zu überwachen,
d) im Falle eines Erkennens eines Benutzers (10) im Betätigungsbereich (22) ein Arbeitssignal für das Fahrzeug (1) bereitzustellen,
wobei eine Notbetätigung (90) zum zusätzlichen Auslösen des Arbeitssignals vorgesehen ist, die geeignet ist,
e) über eine Aktivierung der Notbetätigung (90) mit einem Körperteil (11, 12) des Benutzers (10) das Arbeitssignal für das Fahrzeug (1) bereitzustellen, wobei das Sensorsvstem (30) Licht im für den Benutzer (10) nicht sichtbaren Bereich aussendet, wobei das Sensorsystem (30) gepulstes Licht aussendet.

2. Montagemodul (20) nach Anspruch 1,
**dadurch gekennzeichnet,**
**dass** die Notbetätigung (90) ein Aktivierungsmittel (91) aufweist, das insbesondere ein Taster oder ein Schalter ist.

3. Montagemodul (20) nach Anspruch 2,
**dadurch gekennzeichnet,**
**dass** das Aktivierungsmittel (91) kapazitiv oder induktiv oder berührungslos oder mit einem Piezoelement funktionierend ausgebildet ist.

4. Montagemodul (20) nach einem der vorhergehenden Ansprüche,
**dadurch gekennzeichnet,**
**dass** das Sensorsystem (30) geeignet ist, den Detektionsbereich (21) und/oder den Betätigungsbereich (22) mit einer erhöhten Leistung zu überwachen und/oder entstehen zu lassen, insbesondere wenn eine Verschmutzung am Sensorsystem (30) vorliegt.

5. Montagemodul (20) nach einem der vorhergehenden Ansprüche,
**dadurch gekennzeichnet,**
**dass** das optische Sensorsystem (30) einen Sensor (50) und ein Lichtmodul (40) aufweist, mit dem Licht (44) emittierbar ist, um einen Detektionsbereich (21) entstehen zu lassen, wobei der Sensor (50) ausgebildet ist, Licht aus dem Detektionsbereich (21) und/oder dem Betätigungsbereich (22) zu empfangen, wobei insbesondere der Detektionsbereich (21) für den Benutzer (10) nicht sichtbar ist.

6. Montagemodul (20) nach Anspruch 5,
**dadurch gekennzeichnet,**
**dass** das Lichtmodul (40) und/oder der Sensor (50) ein Linsensystem (51) aufweisen, wobei insbesondere das Linsensystem (51) einen Filter aufweist und/oder das Sensorsystem (30) ein starres Linsensystem (51) aufweist.

7. Montagemodul (20) nach einem der vorhergehenden Ansprüche,
**dadurch gekennzeichnet,**
**dass** ein Anzeigeelement (43) vorgesehen ist, um den Betätigungsbereich (22) entstehen zu lassen, wobei insbesondere der Betätigungsbereich (22) für den Benutzer (10) sichtbar ist.

8. Montagemodul (20) nach einem der Ansprüche 5 bis 7,
**dadurch gekennzeichnet,**
**dass** das Lichtmodul (40) sowie das Anzeigeelement (43) derart ausgerichtet sind, dass der Betätigungsbereich (22) näher am Kraftfahrzeug (1) sich befindet als der Detektionsbereich (21), insbesondere dass zwei Betätigungsbereiche (22) vorgesehen sind.

9. Montagemodul (20) nach einem der vorhergehenden Ansprüche,
**dadurch gekennzeichnet,**
**dass** das Sensorsystem (30) derart ausgebildet ist, dass der Detektionsbereich (21) in mindestens zwei Zonen (23, 24) aufgeteilt ist, in eine Nahzone (23) und in eine Fernzone (24), wobei die Nahzone (23) in einem geringeren Abstand zum Sensorsystem (30) liegt als die Fernzone (24), wobei ein Erkennen des Benutzers (10) gemäß Schritt b) erst dann erfolgt, wenn der Benutzer (10) sich in der Nahzone (23) befindet.

10. Montagemodul (20) nach einem der vorhergehenden Ansprüche,
**dadurch gekennzeichnet,**
**dass** das Montagemodul (20) in einer Aufnahme (25) angeordnet ist, die zur Montage des Montagemoduls (20) an dem Kraftfahrzeug (1) ausgebildet ist, und/oder das Montagemodul (20) oder die Aufnahme (25) geeignet ist, am Fahrzeugheck (82) oder an einer Fahrzeugseite befestigt zu werden, insbesondere dass das Montagemodul (20) in eine Griffleiste (6) des Kraftfahrzeuges (1) integrierbar ist.

11. Montagemodul (20) nach einem der vorhergehenden Ansprüche,
**dadurch gekennzeichnet,**
**dass** der optische Sensor (50) ein LDPD-Sensor ist.

12. Montagemodul (20) nach einem der vorhergehenden Ansprüche,
**dadurch gekennzeichnet,**
**dass** das optische Sensorsystem (30) derart ausgebildet ist, dass sich der Detektionsbereich (21) zumindest teilweise oberhalb einer Bodenfläche (15), auf der das Kraftfahrzeug (1 steht, befindet.

13. Montagemodul (20) nach einem der vorhergehenden Ansprüche,
**dadurch gekennzeichnet,**
**dass** das Arbeitssignal ein Signal zum Entriegeln und/oder Verriegeln und/oder Öffnen und/oder Verschließen eines beweglichen Teils (2, 3) des Kraftfahrzeuges (1) ist, wobei insbesondere das bewegliche Teil (2, 3) eine Heckklappe (2) oder eine Seitentür (3) oder eine Schiebetür ist.

14. Verfahren zur Auslösung eines Arbeitssignals für ein Kraftfahrzeug (1), wobei insbesondere ein Montagemodul (20) gemäß der Ansprüche 1 bis 13 betrieben wird, mit einem optischen Sensorsystem (30), der folgende Schritte durchführt:
a) Überwachen eines außerhalb des Fahrzeuges (1) liegenden Detektionsbereichs (21),
b) im Falle eines Erkennens eines Benutzers (10) im Detektionsbereich (21) Auslösen eines Signal für den Start einer Authentifizierungsüberprüfung zwischen einem ID-Geber (13) und dem Kraftfahrzeug (1),
c) Überwachen eines außerhalb des Kraftfahrzeuges (1) liegenden, sich vom Detektionsbereich (21) unterscheidenden Betätigungsbereichs (22),
d) im Falle eines Erkennens eines Benutzers (10) im Betätigungsbereich (22) Bereitstellen des Arbeitssignals für das Kraftfahrzeug (1),
wobei zusätzlich eine Notbetätigung (90) vorgesehen ist, die folgende Schritte durchführt:
e) im Falle einer Aktivierung der Notbetätigung (90) mit einem Körperteil (11, 12) des Benutzers (10) zusätzliches Bereitstellen des Arbeitssignals für das Kraftfahrzeug (1)
das Sensorsystem (30) Licht im für den Benutzer (10) nicht sichtbaren Bereich aussendet, wobei das Sensorsystem (30) gepulstes Licht aussendet.

15. Verfahren nach Anspruch 14,
**dadurch gekennzeichnet,**
**dass** die Notbetätigung (90) kapazitiv und/oder induktiv und/oder berührungslos betätigt wird.

16. Verfahren nach Anspruch 14 oder 15,
**dadurch gekennzeichnet,**
**dass** Schritt e) durchgeführt wird, wenn ein defekt und/oder eine Verschmutzung des optischen Sensorsystems (30) vorliegt, und/oder dass die Notbetätigung (90) erst dann aktiviert wird, wenn ein defekt und/oder eine Verschmutzung des optischen Sensorsystems (30) erkannt wird.

17. Verfahren nach einem der Ansprüche 14 bis 16,
**dadurch gekennzeichnet,**
**dass** gemäß Schritt e) nach einer Aktivierung der Notbetätigung eine Authentifizierungsüberprüfung zwischen dem ID-Geber (13) und dem Kraftfahrzeug (1) durchgeführt wird, und erst bei einer positiven Authentifizierungsüberprüfung das Arbeitssignal für das Kraftfahrzeug (1) bereitgestellt wird.

18. Verfahren nach einem der Ansprüche 14 bis 17,
**dadurch gekennzeichnet,**
**dass** im Falle einer Erkennung einer Verschmutzung des optischen Sensorsystems (30), das Sensorsystem (30) mit einer erhöhten Leistung betrieben wird, insbesondere um den Detektionsbereich (21) und/oder den Betätigungsbereich (22) zu überwachen und/oder den Detektionsbereich (21) und/oder den Betätigungsbereich (22) zu schaffen.

19. Verfahren nach einem der Ansprüche 14 bis 18,
**dadurch gekennzeichnet,**
**dass** der Detektionsbereich (21) in mindestens zwei Zonen (23, 24) aufgeteilt ist, in eine Nahzone (23) und in eine Fernzone (24), wobei die Nahzone (23) in einem geringeren Abstand zum Sensorsystem (30) liegt als die Fernzone (24), wobei ein Erkennen des Benutzers (10) gemäß Schritt b) erst dann erfolgt, wenn der Benutzer (10) sich in der Nahzone (23) befindet, insbesondere dass der Detektionsbereich (21) dauerhaft überwacht wird.

20. Verfahren nach einem der Ansprüche 14 bis 19,
**dadurch gekennzeichnet,**
**dass** ein Anzeigeelement (43) vorgesehen ist, das für den Schritt c) Licht im sichtbaren Bereich aussendet, um einen Betätigungsbereich (22) für den Benutzer (10) zu schaffen.

21. Verfahren nach einem der Ansprüche 14 bis 20,
**dadurch gekennzeichnet,**
**dass** das Sensorsystem (30) einen Sensor (50) aufweist, der Licht (44) aus dem Detektionsbereich (21) und/oder Betätigungsbereich (22) empfängt, wobei das Sensorsystem eine Kontrolleinheit (60) aufweist, die Daten des Sensors (50) auswertet.

22. Verfahren nach einem der Ansprüche 14 bis 21,
**dadurch gekennzeichnet,**
**dass** das Sensorsystem (30) eine Überprüfung einer Abstandsänderung durchführt, um im Detektionsbereich (21) und/oder im Betätigungsbereich (22) einen Benutzer (10) zu erkennen, der sich dem Kraftfahrzeug (1) nähert, insbesondere dass das Sensorsystem (30) erst dann eine Überprüfung einer Abstandsänderung durchführt, wenn der Benutzer (10) sich in einer Nahzone (23) befindet, wobei der Detektionsbereich (21) in mindestens zwei Zonen (23, 24) aufgeteilt ist, in die Nahzone (23) und in eine Fernzone (24), wobei die Nahzone (23) in einem geringeren Abstand zum Sensorsystem (30) liegt als die Fernzone (24), wobei ein Erkennen des Benutzers (10) gemäß Schritt b) erst dann erfolgt, wenn der Benutzer (10) sich in der Nahzone (23) befindet.

23. Verfahren nach einem der Ansprüche 14 bis 22,
**dadurch gekennzeichnet,**
**dass** der Detektionsbereich (21) in mindestens zwei Zonen (23, 24) aufgeteilt ist, in eine Nahzone (23) und in eine Fernzone (24), wobei die Nahzone (23) in einem geringeren Abstand zum Sensorsvstem (30) liegt als die Fernzone (24), wobei ein Erkennen des Benutzers (10) gemäß Schritt b) erst dann erfolgt, wenn der Benutzer (10) sich in der Nahzone (23) befindet, wobei das Sensorsystem (30) zwischen einen Ruhemodus (31) und einem Arbeitsmodus (32) schaltbar ist, wobei solange das Sensorsystem (30) im Ruhemodus (31) geschaltet ist, bis der Benutzer (10) in die Nahzone (23) gelangt.

24. Verfahren nach Anspruch 23,
**dadurch gekennzeichnet,**
**dass** das Sensorsystem (30) Bilder des Detektionsbereiches (21) und/oder des Betätigungsbereiches (22) empfängt und/oder aufnimmt, wobei die Bilder gepulste Bilder (61) und ungepulste Bilder sind, wobei die gepulsten Bilder (61) durch die Reflexion eines emittierten, gepulsten Lichts des Sensorsystems (30) entstehen und die ungepulsten Bilder durch das Licht (44) des Detektionsbereiches (21) und/oder Betätigungsbereiches (22) entstehen, insbesondere dass die Pulsfrequenz des emittierten Lichtes im Ruhemodus (31) geringer ist als im Arbeitsmodus (32).

25. Verfahren nach einem der Ansprüche 14 bis 24,
**dadurch gekennzeichnet,**
**dass** die Überprüfung des Detektionsbereiches (21) derart durchgeführt wird, dass die gepulsten Bilder (61) mit den ungepulsten Bildern verglichen werden, insbesondere dass eine Überprüfung einer Abstandsänderung durchgeführt wird, bei der die gepulsten Bilder (61) mit den ungepulsten Bildern verglichen werden.

26. Verfahren nach einem der Ansprüche 14 bis 25,
**dadurch gekennzeichnet,**
**dass** während des Schritts b) und/oder e) der ID-Geber (13) einen Authentifizierungscode an das Zugangskontrollsystem (14) des Kraftfahrzeuges (1) sendet und das Zugangskontrollsystem (14) den Authentifizierungscode mit einem gespeicherten Code vergleicht und im Falle einer Übereinstimmung ein Entriegelungssignal ausgelöst wird.

27. Verfahren nach einem der Ansprüche 14 bis 26,
**dadurch gekennzeichnet,**
**dass** Schritt d) nur im Falle einer definierten Bewegung eines Körperteils (11, 12) des Benutzers (10) im/am Betätigungsbereich (22) erfolgt, insbesondere dass das Körperteil (11, 12) ein Fuß (11) oder eine Hand (12) des Benutzers (10) ist.

28. Verfahren nach einem der Ansprüche 14 bis 27,
**dadurch gekennzeichnet,**
**dass** der Betätigungsbereich (22) auf dem Boden (15) sich befindet, auf den der Benutzer (10) für den Schritt d) seinen Fuß (11) zu stellen hat, insbesondere der Benutzer (10) lediglich für eine definierte Zeit seinen Fuß (11) zu stellen hat, um gemäß des Schrittes d) ein Arbeitssignal auszulösen, und/oder
**dass** das Sensorsystem (30) ein Lichtmodul (40) aufweist, das Licht (44) emittiert, so das ein Sendebereich entsteht, wobei der Sensor (30) einen Empfangsbereich aufweist, der sich mit dem Sendebereich zumindest teilweise überschneidet, wobei der Bereich der Überschneidung der Detektionsbereich (21) ist.

## Claims

1. Assembly module (20) for a motor vehicle (1), with
an optical sensor system (30) which is suitable
a) to monitor a detection area (21) located outside the vehicle (1),
b) in the event of detection of a user (10) in the detection area (21), to trigger a signal for starting an authentication check between an ID transmitter (13) and the motor vehicle (1),
c) to monitor an operating area (22) located outside the vehicle (1) and differing from the detection area (21),
d) to provide an operating signal for the vehicle (1) in the event of detection of a user (10) in the operating area (22),
wherein an emergency actuation (90) for additionally triggering the operating signal is comprised, which is suitable
e) to provide an operating signal for the vehicle (1) by activating the emergency actuation (90) with a body part (11, 12) of the user (10),
wherein the sensor system (30) emits light in the range not visible to the user (10), wherein the sensor system (30) emits pulsed light.

2. Assembly module (20) according to claim 1,
**characterized in that**,
the emergency actuation (90) comprises an activation means (91) which is in particular a push-button or a switch.

3. Assembly module (20) according to claim 2,
**characterized in that**,
the activation means (91) is designed to be capacitive or inductive or contactless or to function with a piezoelectric element.

4. Assembly module (20) according to one of the preceding claims,
**characterized in that**,
the sensor system (30) is suitable for monitoring the detection area (21) and/or the actuation area (22) with an increased power and/or causing it to be created, in particular if there is contamination on the sensor system (30).

5. Assembly module (20) according to one of the preceding claims,
**characterized in that**,
the optical sensor system (30) comprises a sensor (50) and a light module (40) with which light (44) can be emitted in order to create a detection area (21), wherein
the sensor (50) is designed to receive light from the detection area (21) and/or the actuation area (22), wherein in particular the detection area (21) is not visible to the user (10).

6. Assembly module (20) according to claim 5,
**characterized in that**,
the light module (40) and/or the sensor (50) have a lens system (51), in particular the lens system (51) comprising a filter and/or the sensor system (30) comprising a rigid lens system (51).

7. Assembly module (20) according to one of the preceding claims,
**characterized in that**,
a display element (43) is comprised in order to create the actuation area (22), the actuation area (22) in particular being visible to the user (10).

8. Assembly module (20) according to one of claims 5 to 7,
**characterized in that**,
the light module (40) and the display element (43) are aligned such that the actuation area (22) is located closer to the motor vehicle (1) than the detection area (21), in particular **in that** two actuation areas (22) are comprised.

9. Assembly module (20) according to one of the preceding claims,
**characterized in that**,
the sensor system (30) is designed such that the detection area (21) is divided into at least two zones (23, 24), a near zone (23) and a far zone (24), wherein
the near zone (23) is at a smaller distance from the sensor system (30) than the far zone (24), wherein
a detection of the user (10) according to step b) only occurs when the user (10) is in the near zone (23).

10. Assembly module (20) according to one of the preceding claims,
**characterized in that**,
the assembly module (20) is arranged in a receptacle (25) which is designed for mounting the assembly module (20) on the motor vehicle (1), and/or
the assembly module (20) or the receptacle (25) is suitable for being fastened to the vehicle rear (82) or to one side of the vehicle, in particular **in that** the assembly module (20) can be integrated into a handle strip (6) of the motor vehicle (1).

11. Assembly module (20) according to one of the preceding claims,
**characterized in that**,
the optical sensor (50) is an LDPD sensor.

12. Assembly module (20) according to one of the preceding claims,
**characterized in that**,
the optical sensor system (30) is designed such that the detection area (21) is located at least partially above a floor surface (15) on which the motor vehicle (1) is standing.

13. Assembly module (20) according to one of the preceding claims,
**characterized in that**,
the operating signal is a signal for unlocking and/or locking and/or opening and/or closing a movable part (2, 3) of the motor vehicle (1), wherein
in particular the movable part (2, 3) is a tailgate (2) or a side door (3) or a sliding door.

14. Method for triggering an operating signal for a motor vehicle (1), wherein in particular an assembly module (20) is operated in accordance with claims 1 to 13, with an optical sensor system (30) which carries out the following steps:
a) monitoring of a detection area (21) located outside the vehicle (1)
b) in the event of detection of a user (10) in the detection area (21), triggering of a signal for starting an authentication check between an ID transmitter (13) and the motor vehicle (1),
c) monitoring of an actuation area (22) located outside the motor vehicle (1) and differing from the detection area (21),
d) in the event of detection of a user (10) in the actuation area (22), provision of an operating signal for the motor vehicle (1),
wherein an emergency actuation (90) is additionally provided which carries out the following steps:
e) in the event of activation of the emergency actuation (90) with a body part (11, 12) of the user (10), additional provision of the operating signal for the motor vehicle (1), wherein
the sensor system (30) emits light in the range not visible to the user (10), wherein the sensor system (30) emits pulsed light.

15. Method according to claim 14,
**characterized in that**,
the emergency actuation (90) is actuated capacitively and/or inductively and/or contactlessly.

16. Method according to claim 14 or 15,
**characterized in that**,
step e) is carried out if there is a defect and/or contamination of the optical sensor system (30), and/or **in that** the emergency actuation (90) is activated only when a defect and/or contamination of the optical sensor system (30) is detected.

17. Method according to one of claims 14 to 16,
**characterized in that**,
in accordance with step e), an authentication check is carried out between the ID transmitter (13) and the motor vehicle (1) after activation of the emergency actuation, and the operating signal for the motor vehicle (1) is only provided in the event of a positive authentication check.

18. Method according to one of claims 14 to 17,
**characterized in that**,
in the event of detection of contamination of the optical sensor system (30), the sensor system (30) is operated with an increased power, in particular in order to monitor the detection area (21) and/or the actuation area (22) and/or to create the detection area (21) and/or the actuation area (22).

19. Method according to one of claims 14 to 18,
**characterized in that**,
the detection area (21) is divided into at least two zones (23, 24), a near zone (23) and a far zone (24), the near zone (23) being at a shorter distance from the sensor system (30) than the far zone (24), wherein
a detection of the user (10) according to step b) only occurs when the user (10) is in the near zone (23), in particular that the detection area (21) is permanently monitored.

20. Method according to one of claims 14 to 19,
**characterized in that**,
a display element (43) is provided which, for step c), emits light in the visible range in order to create an operating area (22) for the user (10).

21. Method according to one of claims 14 to 20,
**characterized in that**,
the sensor system (30) comprises a sensor (50) which receives light (44) from the detection area (21) and/or actuation area (22), the sensor system having a control unit (60) which evaluates data from the sensor (50).

22. Method according to one of claims 14 to 21,
**characterized in that**,
the sensor system (30) carries out a check of a change in distance in order to detect a user (10) approaching the motor vehicle (1) in the detection zone (21) and/or in the actuation zone (22), in particular **in that** the sensor system (30) only carries out a check of a change in distance when the user (10) is located in a near zone (23), wherein
the detection area (21) is divided into at least two zones (23, 24), into the near zone (23) and into a far zone (24), the near zone (23) being at a shorter distance from the .sensor system (30) than the far zone (24), wherein detection of the user (10) according to step b) only occurs when the user (10) is located in the near zone (23).

23. Method according to one of claims 14 to 22,
**characterized in that**,
the detection area (21) is divided into at least two zones (23, 24), a near zone (23) and a far zone (24), wherein
the near zone (23) is at a smaller distance from the sensor system (30) than the far zone (24), wherein
a detection of the user (10) according to step b) only occurs when the user (10) is in the near zone (23), wherein
the sensor system (30) is switchable between a sleep mode (31) and an operating mode (32), wherein
the sensor system (30) is switched in the sleep mode (31) until the user (10) reaches the near zone (23).

24. Method according to claim 23,
**characterized in that**,
the sensor system (30) receives and/or records images of the detection area (21) and/or of the actuation area (22), wherein
the images are pulsed images (61) and unpulsed images, wherein
the pulsed images (61) are created from the reflection of an emitted pulsed light of the sensor system (30) and the unpulsed images are created from the light (44) of the detection area (21) and/or actuation area (22), in particular that the pulse frequency of the emitted light is lower in the sleep mode (31) than in the operating mode (32).

25. Method according to one of claims 14 to 24,
**characterized in that**,
the checking of the detection area (21) is carried out in such a way that the pulsed images (61) are compared with the unpulsed images, in particular that a check of a distance change is carried out in which the pulsed images (61) are compared with the unpulsed images.

26. Method according to one of claims 14 to 25,
**characterized in that**,
during step b) and/or e), the ID transmitter (13) sends an authentication code to the access control system (14) of the motor vehicle (1) and the access control system (14) compares the authentication code with a stored code and, in the event of a match, an unlocking signal is triggered.

27. Method according to one of claims 14 to 26,
**characterized in that**,
step d) takes place only in the event of a defined movement of a body part (11, 12) of the user (10) in/at the actuation region (22), in particular **in that** the body part (11, 12) is a foot (11) or a hand (12) of the user (10).

28. Method according to one of claims 14 to 27,
**characterized in that**,
the actuation region (22) is located on the floor (15) on which the user (10) has to place his foot (11) for step d), in particular the user (10) has to place his foot (11) only for a defined time in order to trigger a operating signal in accordance with step d), and/or
**in that** the sensor system (30) comprises a light module (40) which emits light (44), such that a transmission range is created, wherein
the sensor (30) comprises a reception range which at least partially overlaps with the transmission range, wherein
the area of overlap is the detection area (21).

## Revendications

1. Module d'assemblage (20) pour un véhicule automobile (1), avec
un système de capteurs optiques (30) qui convient
a) à surveiller une zone de détection (21) située à l'extérieur du véhicule (1)
b) en cas de détection d'un utilisateur (10) dans la zone de détection (21), de déclencher un signal pour lancer un contrôle d'authentification entre un émetteur d'identification (13) et le véhicule automobile (1),
c) pour surveiller une zone d'actionnement (22) située à l'extérieur du véhicule (1) et différente de la zone de détection (21),
d) de fournir un signal de fonctionnement pour le véhicule (1) en cas de détection d'un utilisateur (10) dans la zone d'actionnement (22),
dans lequel est prévu un moyen d'actionnement d'urgence (90) pour déclencher en plus le signal de fonctionnement, ce qui est approprié
e) de fournir un signal de fonctionnement pour le véhicule (1) en activant le moyen d'actionnement d'urgence (90) avec une partie du corps (11, 12) de l'utilisateur (10),
dans lequel le système de capteurs (30) émet de la lumière dans la plage non visible par l'utilisateur (10), dans lequel le système de capteurs (30) émet de la lumière pulsée.

2. Module d'assemblage (20) selon la revendication 1,
**caractérisé en ce que**
le moyen d'actionnement d'urgence (90) comprend un moyen d'activation (91) qui est notamment un bouton-poussoir ou un interrupteur.

3. Module d'assemblage (20) selon la revendication 2,
**caractérisé en ce que**
le moyen d'activation (91) est conçu pour être capacitif ou inductif ou sans contact ou pour fonctionner avec un élément piézoélectrique.

4. Module d'assemblage (20) selon l'une des revendications précédentes,
**caractérisé en ce que**
le système de capteurs (30) est adapté pour surveiller la zone de détection (21) et/ou la zone d'actionnement (22) avec une puissance accrue et/ou pour laisser se créer, en particulier s'il y a une contamination sur le système de capteurs (30).

5. Module d'assemblage (20) selon l'une des revendications précédentes,
**caractérisé en ce que**
le système de capteurs optiques (30) comporte un capteur (50) et un module de lumière (40) avec lequel de la lumière (44) peut être émise pour créer une zone de détection (21), où
le capteur (50) est conçu pour recevoir la lumière de la zone de détection (21) et/ou de la zone d'actionnement (22), la zone de détection (21), en particulier, n'étant pas visible pour l'utilisateur (10).

6. Module d'assemblage (20) selon la revendication 5,
**caractérisé en ce que**
le module de lumière (40) et/ou le capteur (50) comportent un système de lentille (51), en particulier le système de lentille (51) comportant un filtre et/ou le système de capteur (30) comportant un système de lentille rigide (51).

7. Module d'assemblage (20) selon l'une des revendications précédentes,
**caractérisé en ce**
**qu'**un élément d'affichage (43) est prévu afin de créer la zone d'actionnement (22), la zone d'actionnement (22) étant notamment visible par l'utilisateur (10).

8. Module d'assemblage (20) selon l'une des revendications 5 à 7,
**caractérisé en ce que**
le module de lumière (40) et l'élément d'affichage (43) sont alignés de telle sorte que la zone d'actionnement (22) soit située plus près du véhicule automobile (1) que la zone de détection (21), en particulier **en ce que** deux zones d'actionnement (22) sont prévues.

9. Module d'assemblage (20) selon l'une des revendications précédentes,
**caractérisé en ce que**
le système de capteurs (30) est conçu de telle sorte que la zone de détection (21) est divisée en au moins deux zones (23, 24), une zone proche (23) et une zone éloignée (24), dans lequel
la zone proche (23) est à une distance plus faible du système de capteurs (30) que la zone éloignée (24), dans lequel
une détection de l'utilisateur (10) selon l'étape b) n'a lieu que lorsque l'utilisateur (10) se trouve dans la zone proche (23).

10. Module d'assemblage (20) selon l'une des revendications précédentes,
**caractérisé en ce que**
le module d'assemblage (20) est disposé dans un réceptacle (25) qui est conçu pour le montage du module d'assemblage (20) sur le véhicule automobile (1), et/ou
le module d'assemblage (20) ou le réceptacle (25) est adapté pour être fixé à l'arrière (82) ou sur un côté du véhicule, en particulier **en ce que** le module d'assemblage (20) peut être intégré dans une poignée (6) du véhicule automobile (1).

11. Module d'assemblage (20) selon l'une des revendications précédentes,
**caractérisé en ce que**
le capteur optique (50) est un capteur LDPD.

12. Module d'assemblage (20) selon l'une des revendications précédentes,
**caractérisé en ce que**
le système de capteurs optiques (30) est conçu de telle sorte que la zone de détection (21) se trouve au moins partiellement au-dessus d'une surface de plancher (15) sur laquelle se trouve le véhicule automobile (1).

13. Module d'assemblage (20) selon l'une des revendications précédentes,
**caractérisé en ce que**
le signal de fonctionnement est un signal de déverrouillage et/ou de verrouillage et/ou d'ouverture et/ou de fermeture d'une partie mobile (2, 3) du véhicule automobile (1), dans lequel
en particulier la partie mobile (2, 3) est un hayon (2) ou une porte latérale (3) ou une porte coulissante.

14. Procédé de déclenchement d'un signa! de fonctionnement pour un véhicule automobile (1), dans lequel on fait fonctionner en particulier un module d'assemblage (20) selon les revendications 1 à 13, avec un système de capteur optique (30) qui effectue les étapes suivantes :
a) surveillance d'une zone de détection (21) située à l'extérieur du véhicule (1)
b) en cas de détection d'un utilisateur (10) dans la zone de détection (21), déclenchement d'un signal pour lancer un contrôle d'authentification entre un émetteur d'identification (13) et le véhicule automobile (1),
c) surveillance d'une zone d'actionnement (22) située à l'extérieur du véhicule automobile(1) et différente de la zone de détection (21),
d) en cas de détection d'un utilisateur (10) dans la zone d'actionnement (22), fourniture du signal de fonctionnement pour le véhicule automobile (1),
dans lequel est prévu en outre un moyen d'actionnement d'urgence (90) qui exécute les étapes suivantes :
e) en cas d'activation du moyen d'actionnement d'urgence (90) avec une partie du corps (11, 12) de l'utilisateur (10), fourniture supplémentaire du signal de fonctionnement pour le véhicule automobile (1)
dans lequel le système de capteurs (30) émet de la lumière dans la plage non visible par l'utilisateur (10), le système de capteurs (30) émettant une lumière pulsée.

15. Procédé selon la revendication 14,
**caractérisé en ce que**
le moyen d'actionnement d'urgence (90) est actionné de manière capacitive et/ou inductive et/ou sans contact.

16. Procédé selon la revendication 14 ou 15,
**caractérisé en ce que**
dans cette étape e) est effectuée s'il y a un défaut et/ou une contamination du système de capteur optique (30), et/ou **en ce que** le moyen d'actionnement d'urgence (90) n'est activé que lorsqu'un défaut et/ou une contamination du système de capteur optique (30) est détecté.

17. Procédé selon l'une des revendications 14 à 16,
**caractérisé en ce que**
conformément à l'étape e), un contrôle d'authentification est effectué entre l'émetteur d'identification (13) et le véhicule automobile (1) après l'activation du moyen d'actionnement d'urgence, et le signal de fonctionnement du véhicule automobile (1) n'est fourni qu'en cas de contrôle d'authentification positif.

18. Procédé selon l'une des revendications 14 à 17,
**caractérisé en ce que**
en cas de détection d'une contamination du système de capteurs optiques (30), le système de capteurs (30) est exploité avec une puissance accrue, notamment pour surveiller la zone de détection (21) et/ou la zone d'actionnement (22) et/ou pour créer la zone de détection (21) et/ou la zone d'actionnement (22).

19. Procédé selon l'une des revendications 14 à 18,
**caractérisé en ce que**
la zone de détection (21) est divisée en au moins deux zones (23, 24), une zone proche (23) et une zone éloignée (24), la zone proche (23) étant à une distance plus faible du système de capteurs (30) que la zone éloignée (24), dans lequel
une détection de l'utilisateur (10) selon l'étape b) n'a lieu que lorsque l'utilisateur (10) se trouve dans la zone proche (23), en particulier que la zone de détection (21) est surveillée en permanence.

20. Procédé selon l'une des revendications 14 à 19,
**caractérisé en ce**
**qu'**il est prévu un élément d'affichage (43) qui, pour l'étape c), émet de la lumière dans le domaine visible afin de créer une zone d'actionnement (22) pour l'utilisateur (10).

21. Procédé selon l'une des revendications 14 à 20,
**caractérisé en ce que**
le système de capteurs (30) comprend un capteur (50) qui reçoit la lumière (44) de la zone de détection (21) et/ou de la zone d'actionnement (22), le système de capteurs comportant une unité de commande (60) qui évalue les données du capteur (50).

22. Procédé selon l'une des revendications 14 à 21,
**caractérisé en ce que**
le système de capteurs (30) effectue un contrôle d'une modification de la distance afin de détecter un utilisateur (10) s'approchant du véhicule automobile (1) dans la zone de détection (21) et/ou dans la zone d'actionnement (22), en particulier **en ce que** le système de capteurs (30) n'effectue un contrôle d'une modification de la distance que lorsque l'utilisateur (10) se trouve dans une zone proche (23), dans lequel
la zone de détection (21) est divisée en au moins deux zones (23, 24), en une zone proche (23) et une zone éloignée (24), la zone proche (23) étant à une distance plus faible du système de capteurs (30) que la zone éloignée (24), dans lequel la détection de l'utilisateur (10) selon l'étape b) n'a lieu que lorsque l'utilisateur (10) se trouve dans la zone proche (23).

23. Procédé selon l'une des revendications 14 à 22,
**caractérisé en ce que**
la zone de détection (21) est divisée en au moins deux zones (23, 24), une zone proche (23) et une zone éloignée (24), dans lequel
la zone proche (23) est à une distance plus faible du système de capteurs (30) que la zone éloignée (24), dans lequel
une détection de l'utilisateur (10) selon l'étape b) n'a lieu que lorsque l'utilisateur (10) se trouve dans la zone proche (23), dans lequel
le système de capteurs (30) est commutable entre un mode de veille (31) et un mode de fonctionnement (32), dans lequel
tant que le système de capteurs (30) est mis en mode de veille (31) jusqu'à ce que l'utilisateur (10) atteigne la zone proche (23).

24. Procédé selon la revendication 23,
**caractérisé en ce que**
le système de capteurs (30) reçoit et/ou enregistre des images de la zone de détection (21) et/ou de la zone d'actionnement (22), dans lequel
les images sont des images pulsées (61) et des images non pulsées, dans lequel
les images pulsées (61) résultent de la réflexion d'une lumière puisée émise par le système de capteurs (30) et les images non pulsées résultent de la lumière (44) de la zone de détection (21) et/ou de la zone d'actionnement (22), en particulier que la fréquence de pulsation de la lumière émise est plus faible en mode de veille (31) qu'en mode de fonctionnement (32).

25. Procédé selon l'une des revendications 14 à 24,
**caractérisé en ce que**
la vérification de la zone de détection (21) est effectuée de telle sorte que les images pulsées (61) soient comparées aux images non puisées, en particulier qu'un contrôle d'un changement de distance est effectué dans lequel les images pulsées (61) sont comparées aux images non pulsées.

26. Procédé selon l'une des revendications 14 à 25,
**caractérisé en ce que**
lors de l'étape b) et/ou e), l'émetteur d'identification (13) transmet un code d'authentification au système de contrôle d'accès (14) du véhicule automobile (1) et le système de contrôle d'accès (14) compare le code d'authentification avec un code mémorisé et, en cas de concordance, un signal de déverrouillage est déclenché.

27. Procédé selon l'une des revendications 14 à 26,
**caractérisé en ce que**
dans cette étape d) n'a lieu qu'en cas de mouvement défini d'une partie du corps (11, 12) de l'utilisateur (10) dans / au niveau de la zone d'actionnement (22), notamment **en ce que** la partie du corps (11, 12) est un pied (11) ou une main (12) de l'utilisateur (10).

28. Procédé selon l'une des revendications 14 à 27,
**caractérisé en ce que**
la zone d'actionnement (22) se trouve sur le sol (15) sur lequel l'utilisateur (10) doit poser son pied (11) pour l'étape d), en particulier l'utilisateur (10) ne doit poser son pied (11) que pendant une periode défini afin de déclencher un signal de fonctionnement conformément à l'étape d), et/ou
**en ce que** le système de capteurs (30) comprend un module de lumière (40) qui émet de la lumière (44), de sorte qu'une portée de transmission est créer, dans lequel
le capteur (30) comprend une portée de réception qui chevauche au moins partiellement la portée de transmission, dans lequel
la zone de chevauchement est la zone de détection (21).
